# EUROPEAN PATENT APPLICATION

(11) **EP 4 030 704 A1**
(43) Date of publication of application: **20.07.2022**
(21) Application number: 20882397.1
(22) Date of filing: 23.09.2020
(51) Int. Cl.: H04L 12/741, H04L 12/743

(54) **MESSAGE SENDING METHOD AND FIRST NETWORK DEVICE**

(30) Priority: 28.10.2019 CN 201911032068; 31.12.2019 CN 201911407777
(71) Applicant: Huawei Technologies Co., Ltd., Longgang District, Shenzhen, Guangdong 518129 (CN)
(72) Inventor: XIE, Jingrong, Shenzhen, Guangdong 518129 (CN); DUAN, Fanghong, Shenzhen, Guangdong 518129 (CN); LIU, Yisong, Shenzhen, Guangdong 518129 (CN); WANG, Weiwei, Shenzhen, Guangdong 518129 (CN)
(74) Representative: MERH-IP Matias Erny Reichl Hoffmann Patentanwälte PartG mbB
(86) International application number: PCT/CN2020/116957
(87) International publication number: WO 2021/082812

(57) **Abstract**

This application provides a packet sending method. The method includes: The first network device receives a first multicast packet, and determines first information based on the first multicast packet, where the first information indicates an attribute of the first multicast packet. The first network device determines that a state of a first link interface is unavailable, and performs a modulo operation on the first information based on a second parameter, to obtain second indication information, where the second indication information indicates a second link interface through which the first network device forwards the first multicast packet, the second parameter is a quantity of link interfaces whose states are available in the first load balancing group, and the first load balancing group includes the first link interface and the second link interface. The first network device forwards the first multicast packet through the second link interface. This can reduce or eliminate out-of-order of multicast traffic when a quantity of members in a load balancing group changes.

## Description

This application claims priorities to Chinese Patent Application No. 201911032068.7, filed on October 28, 2019, and entitled "MULTICAST PACKET FORWARDING METHOD, DEVICE, AND SYSTEM", and to Chinese Patent Application No. 201911407777.9, filed on December 31, 2019, and entitled "PACKET SENDING METHOD AND FIRST NETWORK DEVICE", which are incorporated herein by reference in their entireties.

### TECHNICAL FIELD

This application relates to the network communications field, and more specifically, to a packet sending method and a first network device.

### BACKGROUND

Multicast (multicast) is a data transmission mode in which data is efficiently sent to a plurality of receivers in a transmission control protocol (transmission control protocol, TCP)/internet protocol (internet protocol, IP) network at a same time by using one multicast address.

A multicast receiver may send a multicast join message to a switch, and the switch may send the multicast join message to a router connected to the switch. The router sends the multicast join message to a multicast source through a network. The multicast source sends multicast traffic to the router through the network, and the router transmits the multicast traffic to the multicast receiver through the switch.

In a conventional technical solution, after receiving the multicast join message sent by the multicast receiver, the multicast source performs hash calculation on a plurality of multicast flows based on a quantity of members in a load balancing group, and determines network devices in the load balancing group that forward the plurality of multicast flows. If the quantity of members in the load balancing group changes, for example, a network device in the load balancing group is faulty, on a control plane, hash calculation may be performed on a multicast flow based on a new quantity of members in the load balancing group, and network devices that forward the plurality of multicast flows are determined. A same data flow may be forwarded by different network devices, and consequently, the multicast traffic may be out of order.

Therefore, how to reduce or eliminate out-of-order of the multicast traffic when the quantity of members in the load balancing group changes becomes an urgent technical problem that needs to be resolved.

### SUMMARY

This application provides a packet sending method and a first network device, to reduce or eliminate out-of-order of multicast traffic when a quantity of members in a load balancing group changes.

According to a first aspect, a packet sending method is provided, including: A first network device receives a first multicast packet.

The first network device determines first information based on the first multicast packet, where the first information indicates an attribute of the first multicast packet. The first network device determines that a state of a first link interface is unavailable, where the first link interface is for forwarding the first multicast packet in a load balancing manner. The first network device performs a modulo operation on the first information based on a second parameter, to obtain second indication information, where the second indication information indicates a second link interface through which the first network device forwards the first multicast packet, the second parameter is a quantity of link interfaces whose states are available in the first load balancing group, the first load balancing group includes the first link interface and the second link interface, and a state of the second link interface is available. The first network device forwards the first multicast packet through the second link interface.

For ease of description, a modulo operation that is performed on the first information based on the second parameter may be referred to as a second modulo operation for short below.

In the foregoing technical solution, when a link is faulty, the first network device needs to perform the second modulo operation only on a multicast packet that is to be transmitted through an interface on the faulty link, and redetermine an available link interface for transmitting the multicast packet. In this way, out-of-order of the multicast traffic can be reduced or eliminated.

In a possible implementation, the first information includes one or more of the following: information about a source address of the first multicast packet, information about a destination address of the first multicast packet, information about the source address and the destination address of the first multicast packet, hash result information corresponding to the source address of the first multicast packet, hash result information corresponding to the information about the destination address of the first multicast packet, and hash result information corresponding to the information about the source address and the destination address of the first multicast packet.

In the foregoing technical solution, hash calculation may be further performed on the first multicast packet, and a modulo operation is performed on a hash calculation result. In this way, a calculation result obtained through hash calculation on the multicast packet is random, and balanced load balancing can be implemented in a load balancing group.

In another possible implementation, before the first network device determines that the state of the first link interface is unavailable, the method further includes: The first network device performs a modulo operation on the first information based on a first parameter, to obtain first indication information, where the first indication information indicates the first link interface through which the first network device forwards the first multicast packet, and the first parameter is related to a quantity of link interfaces in the first load balancing group.

Specifically, the first parameter may be different from the quantity of link interfaces in the first load balancing group, or may be the same as the quantity of link interfaces in the first load balancing group. This is not specifically limited in this application.

For ease of description, a modulo operation on the first information based on the first parameter may be referred to as a first modulo operation for short below.

In the foregoing technical solution, when there is no link fault, based on a result of the first modulo operation, some multicast packets are forwarded by the first network device and discarded on another network device, and some other multicast packets are forwarded by another network device and discarded on the first network device, to implement load balancing. When a link is faulty, the first network device needs to perform the second modulo operation only on a multicast packet that is to be transmitted through an interface on the faulty link, and redetermine an available link interface for transmitting the multicast packet. The first network device performs load balancing on an interface on another normal link based on a result of the first modulo operation. In this way, out-of-order of the multicast traffic disorder can be reduced or eliminated.

In another possible implementation, the first parameter is greater than or equal to the quantity of link interfaces configured in the first load balancing group.

In the foregoing technical solution, the first parameter participating in the operation may be set to be greater than or equal to the quantity of link interfaces configured in the first load balancing group. If the first parameter is greater than the quantity of link interfaces in the first load balancing group, when a network device participating in load balancing is subsequently added, if a total quantity of network devices participating in load balancing does not exceed a value of the first parameter, a configuration of the first parameter participating in load balancing may not need to be changed, and a member participating in load balancing is added. In this way, configuration is more convenient.

The quantity of link interfaces configured in the first load balancing group may also be understood as a current actual quantity of link interfaces in the first load balancing group.

In another possible implementation, the method further includes: If the first network device determines that the state of the first link interface is available, the first network device forwards the first multicast packet through the first link interface.

In another possible implementation, the first network device determines, based on states of the link interfaces in the first load balancing group, that the state of the first link interface is unavailable.

In the foregoing technical solution, the first network device may locally store state information of each member in a load balancing group, for example, whether a link interface of each member is in an available state or an unavailable state. In this way, when a link is faulty, each member in the load balancing group needs to update only state information of each member stored in the member, and the multicast packet may be load balanced based on an updated entry.

In another possible implementation, the states of the link interfaces in the first load balancing group are a bit string with K bits, K is a positive integer greater than 1, a location of each bit in the bit string indicates one link interface in the first load balancing group, and a value of the bit indicates state information of the link interface. The first network device determines, based on a value of a bit corresponding to the first link interface in the bit string, that the state of the first link interface is unavailable

In another possible implementation, the method further includes: The first network device determines, based on a first entry, that the first link interface is a link interface of the first network device, where the first entry indicates whether each link interface in the first load balancing group is a local interface.

In another possible implementation, the first entry is a bit string with L bits or is L lists, L is a positive integer greater than 1, a location of each bit in the bit string indicates one link interface in the first load balancing group, and a value of the bit indicates whether the link interface is a local interface. The first network device determines, based on a value of a bit corresponding to the first link interface in the bit string of the first entry, that the first link interface is a link interface of the first network device.

In another possible implementation, the method further includes: The first network device receives configuration information, where the configuration information includes identities IDs of the link interfaces in the first load balancing group, and the IDs correspond to the bit string of the states of the link interfaces in the first load balancing group.

In another possible implementation, the method further includes: The first network device receives a message sent by each member in the first load balancing group, where the message includes one or more of the following: an identity of the first load balancing group, a state of a link interface of each member in the first load balancing group, and an ID of a link interface that is of each member in the first load balancing group and that is in the first load balancing group.

According to a second aspect, a first network device is provided, including:
a receiving module, configured to receive a first multicast packet;
a determining module, configured to determine first information based on the first multicast packet, where the first information indicates an attribute of the first multicast packet, and
the determining module is further configured to determine that a state of a first link interface is unavailable, where the first link interface is for forwarding the first multicast packet in a load balancing manner;
a calculation module, configured to perform a modulo operation on the first information based on a second parameter, to obtain second indication information, where the second indication information indicates a second link interface through which the first network device forwards the first multicast packet, the second parameter is a quantity of link interfaces whose states are available in the first load balancing group, the first load balancing group includes the first link interface and the second link interface, and a state of the second link interface is available; and
a sending module, configured to forward the first multicast packet through the second link interface.

In a possible implementation, the first information includes one or more of the following: information about a source address of the first multicast packet, information about a destination address of the first multicast packet, information about the source address and the destination address of the first multicast packet, hash result information corresponding to the source address of the first multicast packet, hash result information corresponding to the information about the destination address of the first multicast packet, and hash result information corresponding to the information about the source address and the destination address of the first multicast packet.

In another possible implementation, the calculation module is further configured to perform a modulo operation on the first information based on a first parameter, to obtain first indication information, where the first indication information indicates the first link interface through which the first network device forwards the first multicast packet, and the first parameter is related to a quantity of link interfaces in the first load balancing group.

In another possible implementation, the first parameter is greater than or equal to the quantity of link interfaces configured in the first load balancing group.

In another possible implementation, the determining module is further configured to determine that the state of the first link interface is available, and forward the first multicast packet through the first link interface.

In another possible implementation, the determining module is specifically configured to determine, based on states of the link interfaces in the first load balancing group, that the state of the first link interface is unavailable.

In another possible implementation, the states of the link interfaces in the first load balancing group are a bit string with K bits, K is a positive integer greater than 1, a location of each bit in the bit string indicates one link interface in the first load balancing group, and a value of the bit indicates state information of the link interface.

The determining module is specifically configured to determine, based on a value of a bit corresponding to the first link interface in the bit string, that the state of the first link interface is unavailable.

In another possible implementation, the determining module is further configured to determine, based on a first entry, that the first link interface is a link interface of the first network device, where the first entry indicates whether each link interface in the first load balancing group is a local interface.

In another possible implementation, the first entry is a bit string with L bits or is L lists, L is a positive integer greater than 1, a location of each bit in the bit string indicates one link interface in the first load balancing group, and a value of the bit indicates whether the link interface is a local interface. The determining module is specifically configured to determine, based on a value of a bit corresponding to the first link interface in the bit string of the first entry, that the first link interface is a link interface of the first network device

In another possible implementation, the receiving module is further configured to receive configuration information, where the configuration information includes identities IDs of the link interfaces in the first load balancing group, and the IDs correspond to the bit string of the states of the link interfaces in the first load balancing group.

In another possible implementation, the receiving module is further configured to receive a message sent by each member in the first load balancing group, where the message includes one or more of the following: an identity of the first load balancing group, a state of a link interface of each member in the first load balancing group, and an ID of a link interface that is of each member in the first load balancing group and that is in the first load balancing group.

Advantageous effects of the second aspect and any possible implementation of the second aspect correspond to beneficial effects of the first aspect and any possible implementation of the first aspect, and details are not described herein again.

According to a third aspect, a first network device is provided. The first network device includes a processor, a memory, an interface, and a bus. The interface may be implemented in a wireless or wired manner, and may be specifically a network adapter. The processor, the memory, and the interface are connected through the bus.

The interface may specifically include a transmitter and a receiver, and is configured for the first network device to implement the foregoing receiving and sending. For example, the interface is configured to support receiving a first multicast packet. For another example, the interface is configured to support receiving a message sent by each member of the first load balancing group. For another example, the interface is configured to forward the first multicast packet.

The processor is configured to perform processing performed by the first network device in the foregoing embodiment. For example, the processor is configured to determine first information based on the first multicast packet; determine that a state of the first link interface is unavailable; perform a modulo operation on the first information based on a second parameter, to obtain second indication information; and/or perform another process in the technology described herein. The memory includes an operating system and an application, and is configured to store programs, code, or instructions. When executing the programs, the code, or the instructions, the processor or a hardware device may complete the processing processes of the first network device in the method embodiments. Optionally, the memory may include a read-only memory (read-only memory, ROM) and a random access memory (random access memory, RAM). The ROM includes a basic input/output system (basic input/output system, BIOS) or an embedded system, and the RAM includes an application and an operating system. When the first network device needs to run, a bootloader in the BIOS or the embedded system that is built into the ROM is used to boot a system to start, and boot the first network device to enter a normal running state. After entering the normal running state, the first network device runs the application and the operating system in the RAM, to complete the processing processes of the first network device in the method embodiments.

It may be understood that the first network device may include any quantity of interfaces, processors, or memories in actual application.

According to a fourth aspect, a computer program product is provided. The computer program product includes computer program code. When the computer program code is run on a computer, the computer is enabled to perform the method according to the foregoing aspects.

According to a fifth aspect, a computer-readable medium is provided. The computer-readable medium stores program code, and when the computer program code is run on a computer, the computer is enabled to perform the methods in the foregoing aspects. The computer-readable storage device includes but is not limited to one or more of the following: a read-only memory (read-only memory, ROM), a programmable ROM (programmable ROM, PROM), an erasable PROM (erasable PROM, EPROM), a flash memory, an electrical EPROM (electrically EPROM, EEPROM), and a hard drive (hard drive).

According to a sixth aspect, a chip is provided. The chip includes a processor and a data interface, and the processor reads, by using the data interface, instructions stored in a memory, to perform the method in any one of the first aspect or the possible implementations of the first aspect. In a specific implementation process, the chip may be implemented in a form of a central processing unit (central processing unit, CPU), a micro controller (micro controller unit, MCU), a micro processing unit (micro processing unit, MPU), a digital signal processing (digital signal processing, DSP), a system-on-a-chip (system on chip, SoC), an application-specific integrated circuit (application-specific integrated circuit, ASIC), a field programmable gate array (field programmable gate array, FPGA), or a programmable logic device (programmable logic device, PLD).

According to a seventh aspect, a system is provided. The system includes the foregoing first network device.

### BRIEF DESCRIPTION OF DRAWINGS

FIG. 1 is a schematic diagram of an application scenario to which this application is applied;
FIG. 2 is a schematic flowchart of a packet sending method according to an embodiment of this application;
FIG. 3 is a schematic flowchart of another packet sending method according to an embodiment of this application;
FIG. 4 is a schematic flowchart of a load balancing entry establishment method according to an embodiment of this application;
FIG. 5 is a schematic flowchart of a load balancing entry updating method according to an embodiment of this application;
FIG. 6 is a schematic diagram of a structure of a first network device 400 according to an embodiment of this application;
FIG. 7 is a schematic diagram of a hardware structure of a first network device 2000 according to an embodiment of this application; and
FIG. 8 is a schematic diagram of a hardware structure of another first network device 2100 according to an embodiment of this application.

### DESCRIPTION OF EMBODIMENTS

The following describes technical solutions in this application with reference to the accompanying drawings.

Multicast (multicast) is a data transmission mode in which data is efficiently sent to a plurality of receivers in a transmission control protocol (transmission control protocol, TCP)/internet protocol (internet protocol, IP) network at a same time by using one multicast address. A multicast source sends multicast traffic to a multicast group member in a multicast group through a link in a network, and each multicast group member in the multicast group can receive the multicast traffic. A multicast transmission mode implements a point-to-multipoint data connection between the multicast source and the multicast group members. The multicast traffic needs to be transmitted only once on each network link, and the multicast is replicated only when there is a branch on the link. Therefore, the multicast transmission mode improves data transmission efficiency and reduces a possibility of congestion on a backbone network.

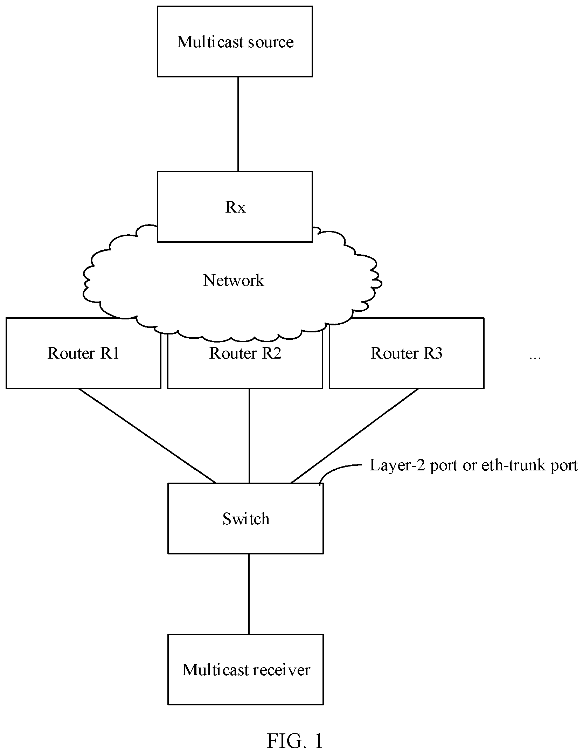

The following first describes in detail an application scenario to which embodiments of this application are applied with reference to FIG. 1.

FIG. 1 is a schematic diagram of a possible multicast scenario to which an embodiment of this application is applied. Refer to FIG. 1. In this scenario, a multicast receiver (receive, RCV), a switch (switch, SW), at least two routers (router, R) such as a router R1/router R2/router R3, Rx, and a multicast source (source, SRC) may be included.

It should be understood that there may be a plurality of routers connected to the switch in embodiments of this application. For ease of description, FIG. 1 shows the router R1/router R2/router R3.

For ease of description, the following uses an example in which the routers connected to the switch are the router R1/router R2 for description.

The multicast receiver may send a multicast join message to the switch, and the switch may send the multicast join message to the routers connected to the switch. In FIG. 1, the router R1 and the router R2 are used as examples. After receiving the multicast join message, the router R1 and/or the router R2 may send the multicast join message to the Rx through a network, and the Rx sends the multicast join message to the multicast source. The multicast source sends multicast traffic to the router R1 and/or the router R2 through the network, and the router R1 and/or the router R2 transmit or transmits the multicast traffic to the multicast receiver through the switch.

It should be understood that the multicast join message sent by the multicast receiver is not specifically limited in embodiments of this application. The multicast join message may be an Internet Group Management Protocol (internet group management protocol, IGMP) message, or may be a multicast listener discovery (multicast listener discovery, MLD) message.

As shown in FIG. 1, the network may be a protocol independent multicast (protocol independent protocol, PIM) network. That is, the router R1/router R2 may send a PIM join message to the Rx through the network. Alternatively, the network may be a bearer network of a multicast virtual private network (multicast virtual private network, MVPN). That is, the router R1/router R2 may send a border gateway protocol (boundary network association, BGP) MVPN multicast join message to the Rx through the network. Alternatively, the network may be a bearer network of an Ethernet virtual private network (ethernet virtual private network, EVPN). That is, the router R1/router R2 may send a BGP EVPN multicast join message to the Rx through the network. This is not limited in this application.

An example in which the network is the bearer network of the EVPN is used. The at least two routers such as the router R1 and the router R2 connected to the switch, and the Rx connected to the multicast source may be provider edges (provider edge, PE) of a multicast EVPN, and the tenant network is a layer-2 network of a same network segment.

Refer to FIG. 1. Interfaces that connect the switch and the routers may be configured as layer-2 ports (layer-2 ports), or may be configured as eth-trunk ports. This is not specifically limited in embodiments of this application. For example, an interface that connects the router R1/router R2 and the switch may be configured as a layer-2 port. For another example, an interface that connects the router R1/router R2 and the switch may be configured as an eth-trunk port.

An example in which the interfaces that connect the switch and the routers are configured as layer-2 ports is used. After one of the at least two routers connected to the switch sends a packet to one port of the switch, the switch may send the packet through one or more other ports of the switch, so that the packet is sent to one or more other routers connected to the switch.

An example in which interfaces that connect the switch and the routers are configured as eth-trunk ports is used. A bridge domain or virtual local area network (virtual local area network, VLAN) to which the eth-trunk port belongs may be configured. The eth-trunk ports of the at least two routers connected to the switch may be configured with a same identity, for example, an Ethernet segment index (ethernet segment index, ESI).

It should be noted that, when interfaces that connect the switch and the routers are configured as eth-trunk ports, after one of the at least two routers connected to the switch sends a packet to one port of the switch, the switch does not send the packet through one or more other ports of the switch. That is, the switch cannot send the packet from one router to one or more other routers connected to the switch.

Optionally, if a packet needs to be sent between the at least two routers connected to the switch, the packet may be sent by using a specific message. For example, a packet may be sent between the at least two routers connected to the switch by using a BGP EVPN message.

In the scenario of FIG. 1, there may be a plurality of combinations of the network between the multicast source and the router R1/router R2 and Rx, and a port configuration between the router R1/router R2 and the switch. This is not specifically limited in this application.

In a conventional technical solution, after receiving a multicast join message sent by the multicast receiver, the multicast source performs hash calculation on a plurality of multicast flows based on a quantity of members in a load balancing group, and determines network devices in the load balancing group that forward the plurality of multicast flows. The load balancing group includes the network devices that can forward the multicast flows. If the quantity of members in the load balancing group changes, for example, a network device in the load balancing group is faulty, on a control plane, hash calculation may be performed on a multicast flow based on a new quantity of members in the load balancing group, and network devices that forward the plurality of multicast flows are determined. A same data flow may be forwarded by different network devices, and consequently out-of-order may occur in a data flow transmission process.

For example, as shown in FIG. 1, routers connected to the switch include the router R1, the router R2, and the router R3. Hash calculation may be performed based on a quantity of members in the load balancing group (for example, if the load balancing group includes the router R1, the router R2, and the router R3, the quantity is 3), to obtain a hash calculation result. For example, the hash calculation result is that the router R1 forwards a multicast flow 1, the router R2 forwards a multicast flow 2, and the router R3 forwards a multicast flow 3. If the router R1 in the load balancing group is faulty, hash calculation needs to be performed again based on a quantity of members in the load balancing group (for example, the quantity is 2), to obtain a hash calculation result. For example, the hash calculation result is that the router R2 forwards the multicast flow 1, the router R3 forwards the multicast flow 2, and the router R2 forwards the multicast flow 3. Because a data flow may include a plurality of multicast data packets, when the quantity of members in the load balancing group changes, the data flow is out of order in a transmission process. For example, when all the members in the load balancing group are normal, the router R1 forwards the multicast flow 1, and when the quantity of members in the load balancing group changes, the router R2 forwards the multicast flow 1. For the multicast flow 1, link delays are different for different router, and out-of-order may occur when the multicast receiver receives the multicast flow 1.

According to the packet sending method provided in embodiments of this application, when the quantity of members in the load balancing group changes, out-of-order of multicast flows may be reduced or eliminated.

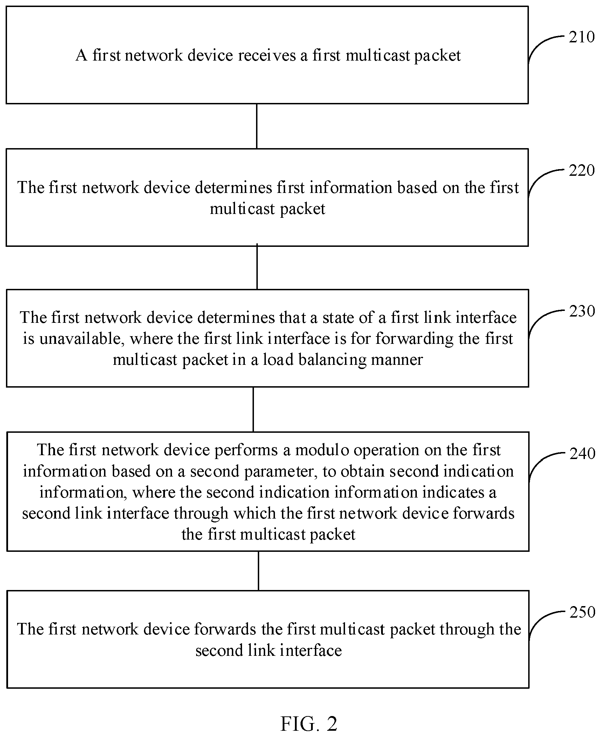

FIG. 2 is a schematic flowchart of a packet sending method according to an embodiment of this application. As shown in FIG. 2, the method may include steps 210 to 250. The following separately describes steps 210 to 250 in detail.

Step 210: A first network device receives a first multicast packet.

In this embodiment of this application, the first network device may be connected to a multicast source, to receive a multicast packet delivered by the multicast source. The first network device may be further connected to a multicast receiver, to forward a multicast packet to the multicast receiver. For example, the first network device may correspond to the router R1 or the router R2 in FIG. 1.

A link interface of the first network device may be used as a member of a first load balancing group. All link interfaces in the first load balancing group may be in an available state, or some link interfaces may be in an unavailable state. A quantity of link interfaces in the first load balancing group may be an integer greater than 1. This is not specifically limited in this application.

It should be understood that, in an implementation of this application, a "member" may refer to an interface that is in a load balancing group and through which a network device is connected to a load balancing link. The interface includes an Ethernet port. For example, in FIG. 1, the R1 and the R2 each have one port that is a load balancing group member. Further, the R1 may include another interface, and the another interface is connected to the switch. In this case, the R1 includes two load balancing group members.

It should be noted that, in this embodiment of this application, a link interface of a network device being in an available state (up) may be understood as: A link of the network device is normal, and can forward a packet. The link interface of the network device being in an unavailable state (down) may be understood as: A link of the network device is faulty, and cannot forward a packet.

Step 220: The first network device determines first information based on the first multicast packet.

In this embodiment of this application, after receiving the first multicast packet, the first network device may determine the first information based on the first multicast packet. The first information indicates an attribute of the first multicast packet. In a possible implementation, the first information is related information of a source address and/or a destination address of the first multicast packet. In another possible implementation, the first information is a corresponding hash calculation result obtained by performing hash calculation on a source address and/or a destination address of the first multicast packet.

For example, the first information is a source address field of the first multicast packet. For another example, the first information is a destination address field of the first multicast packet. For another example, the first network device may further perform hash calculation on the source address field of the first multicast packet, to obtain the first information. The first information is hash result information corresponding to the source address of the first multicast packet. For another example, the first network device may further perform hash calculation on the destination address field of the first multicast packet, to obtain the first information. The first information is hash result information corresponding to information about the destination address of the first multicast packet.

Step 230: The first network device determines that a state of the first link interface is unavailable. The first link interface is for forwarding the first multicast packet in a load balancing manner.

The first network device may determine whether the state of the first link interface for forwarding the first multicast packet in the load balancing manner is available. If the state of the first link interface is available, the first network device may directly forward the first multicast packet through the first link interface. If the state of the first link interface is unavailable, the first network device may perform step 240.

In this embodiment of this application, there are a plurality of specific implementations in which the first network device determines the state of the first link interface. In a possible implementation, the first network device may determine the state of the first link interface based on states of the link interfaces in the first load balancing group. In another possible implementation, the first network device may further determine the state of the first link interface based on a message sent between the first network device and the first link interface.

Specifically, it is assumed that the first load balancing group includes the first network device and a second network device, for example, the router R1 and the router R2 in FIG. 1. A link interface between the router R1 and the switch, and a link interface between the router R2 and the switch may be configured as layer-2 ports. In a possible implementation, the link interface of the router R1 enables the PIM protocol, and sends a packet such as a PIM HELLO packet to the router R2 through the switch. Similarly, the link interface of the router R2 enables the PIM protocol, and sends a packet such as a PIM HELLO packet to the router R1 through the switch. If the router R1 can receive a message sent by the router R2, the router R1 may understand that a state of the link interface of the router R2 is an available state. If the router R1 cannot receive a message sent by the router R2, and the R1 senses that a state of a link between the router R1 and the switch is up, the router R1 may understand that a state of the link interface of the router R2 is unavailable. In another possible implementation, bidirectional forwarding detection (bidirectional forwarding detection, BFD) may be further deployed between the router R1 and the router R2. The router R1 may determine a state of the link interface of the router R2 based on a BFD detection result. Similarly, the router R2 may also determine a state of the link interface of the router R1 based on a BFD detection result. For example, the router R1 and the router R2 send BFD detection packets to each other through the switch at a specific time interval. If the router R1 can receive, in the time interval, the BFD detection packet sent by the router R2, the router R1 may understand that the state of the link interface of the router R2 is an available state. If the router R1 does not receive, in the time interval, the BFD detection packet sent by the router R2, and the R1 senses that the state of the link between the router R1 and the switch is up, the router R1 may understand that the state of the link interface of the router R2 is an unavailable state.

Optionally, before step 230, the first network device may further perform a modulo operation on the first information based on a first parameter, to obtain first indication information. The first indication information indicates the first link interface through which the first network device forwards the first multicast packet.

In this embodiment of this application, a value of the first parameter may be configured, and the first parameter is related to the quantity of link interfaces in the first load balancing group. There are a plurality of specific implementations, which are not limited in this application. In a possible implementation, the first parameter may be configured to be the same as the quantity of link interfaces in the first load balancing group. In another possible implementation, the first parameter may alternatively be configured to be different from the quantity of link interfaces in the first load balancing group. For example, the first parameter is configured to be greater than the quantity of link interfaces in the first load balancing group.

For ease of description, a modulo operation performed by the first network device on the first information based on the first parameter may also be referred to as a first modulo operation for short below.

It should be understood that if the first information indicates result information of hash calculation corresponding to the first multicast packet, the hash calculation may be referred to as first hash for short.

Step 240: The first network device performs a modulo operation on the first information based on a second parameter, to obtain second indication information. The second indication information indicates a second link interface through which the first network device forwards the first multicast packet.

The second parameter is a quantity of link interfaces whose states are available in the first load balancing group, the first load balancing group includes the first link interface and the second link interface, and a state of the second link interface is available.

For ease of description, a modulo operation performed by the first network device on the first information based on the second parameter in step 240 may also be referred to as a second modulo operation for short below.

It should be understood that if the first information indicates result information of hash calculation corresponding to the first multicast packet, the hash calculation may be referred to as second hash for short.

It should be understood that a method of the second hash used in this embodiment of this application may be the same as or different from a method of the first hash. This is not specifically limited.

Step 250: The first network device forwards the first multicast packet through the second link interface.

In the foregoing technical solution, when no link is faulty, based on a result of the first modulo operation, some multicast packets may be forwarded by the first network device and discarded on another network device, and some other multicast packets are forwarded by another network device and discarded on the first network device, to implement load balancing. When a link is faulty, the first network device needs to perform the second modulo operation only on a multicast packet that is to be transmitted through an interface on the faulty link, and redetermine an available link interface for transmitting the multicast packet. The first network device performs load balancing on an interface on another normal link based on a result of the first modulo operation. In this way, out-of-order of the multicast traffic can be reduced or eliminated.

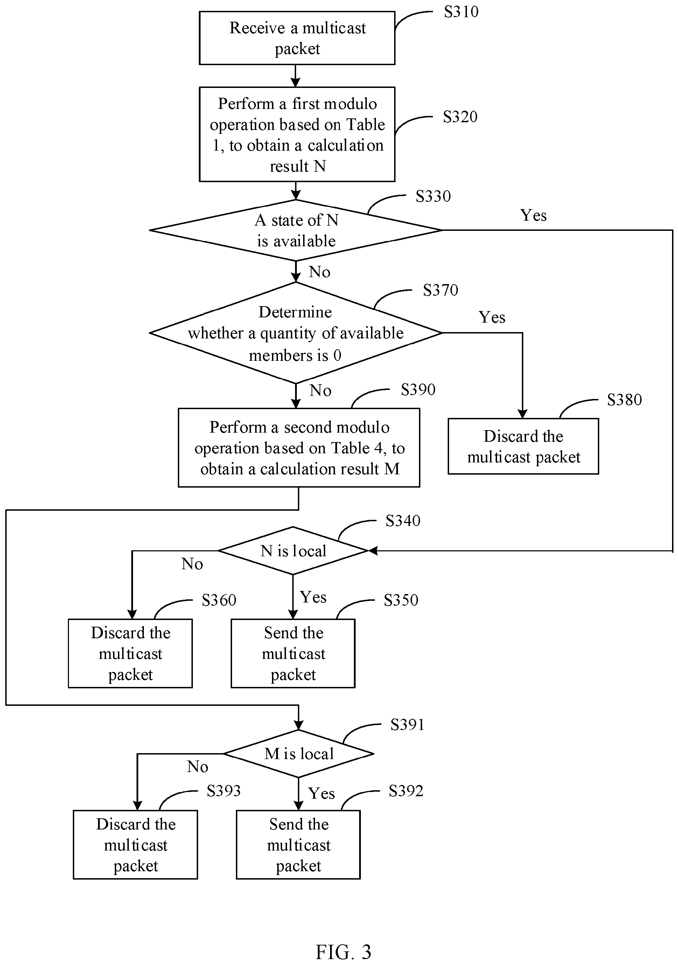

With reference to a specific example in FIG. 3, the following describes a multicast packet forwarding rule in detail. It should be understood that the example in FIG. 3 is merely intended to help a person skilled in the art understand embodiments of this application, and is not intended to limit embodiments of this application to a specific value or a specific scenario in FIG. 3. It is clearly that a person skilled in the art can make various equivalent modifications or changes based on the examples, and such modifications and changes also fall within the scope of embodiments of this application.

FIG. 3 a schematic flowchart of another packet sending method according to an embodiment of this application. As shown in FIG. 3, the method may include steps 310 to 393. The following separately describes steps 310 to 393 in detail.

Step 310: A network device receives a multicast packet.

Step 320: The network device performs a first modulo operation based on Table 1, to obtain a calculation result N.

In this embodiment of this application, Table 1 may be (fwd-load-balance ID, cfg-load-balance-number). fwd-load-balance ID represents an identity (identity, ID) of a load balancing group, for example, fwd-load-balance ID=200. cfg-load-balance-number represents a quantity of members in the load balancing group. For example, in a scenario shown in FIG. 1, if the load balancing group includes the router R1 and the router R2, and one link interface of each of the router R1 and the router R2 performs load balancing, cfg-load-balance-number=2.

It should be understood that, fwd-load-balance ID may also be referred to as fwd-lb-ID for short, and cfg-load-balance-number may also be referred to as cfg_lb_num for short. Table 1 may also be represented as (fwd-lb-ID, cfg_lb_num). A specific name is not limited in this application.

Specifically, the network device may perform Hash1<SG>%cfg_lb_num+1 calculation, to obtain the calculation result N.

S represents a source address of the multicast packet (source, S), G represents a destination address of the multicast packet (goal, G), and Hash1<SG> represents that first hash calculation is performed on a field in the multicast packet. For example, the first hash calculation may include the source address and/or the destination address of the multicast packet. "% cfg_lb_num" represents that the first modulo operation or an integer remainder operation is performed on the quantity of members in the load balancing group in Table 1 based on a hash calculation result (Hash1<SG>). N represents an identity of a first target link interface for forwarding the multicast packet in the load balancing group.

Step 330: The network device determines, based on Table 2, whether a state of the first target link interface that is represented by N and that is configured to forward the multicast packet is an available state.

Table 2 in this embodiment of this application may be (fwd-load-balance ID, fwd-load-balance state). fwd-load-balance state represents a state of each member in the load balancing group. The state may be that a member interface is available or a member interface is unavailable. For details, refer to the foregoing description of a state of a member. Details are not described herein again.

The network device may determine, based on fwd-load-balance state in Table 2, the state of the first target link interface that is represented by N and that is configured to forward the multicast packet. If the state of N is an available state, the network device performs step 340. If the state of N is an unavailable state, the network device performs step 370.

Optionally, fwd-load-balance state in Table 2 may be a bit string (bit string, BS) with K bits, where K is a positive integer greater than 1. In a possible implementation, bits from right to left in the BS successively represent that an interface state of a device 1 is up or down, and that an interface state of a device 2 is up or down. In another possible implementation, bits from left to right in the BS successively represent whether an interface state of a device 1 is up or down, and whether an interface state of a device 2 is up or down.

It should be understood that fwd-load-balance state may also be referred to as State<BS> for short. Table 2 may also be represented as (fwd-lb-ID, State <BS>).

Step 340: The network device determines, based on Table 3, whether the first target link interface that is represented by N and that is configured to forward the multicast packet is a local interface.

If the network device determines, based on Table 2 in step 330, that the state of the first target link interface that is represented by N and that is configured to forward the multicast packet is an available state, the network device may determine, based on Table 3, whether N is a local interface.

It should be understood that Table 3 may correspond to the first entry above.

Table 3 in this embodiment of this application may be (fwd-load-balance ID, fwd-load-balance IsOneself). fwd-load-balance IsOneself represents whether a member in the load balancing group is local.

The network device may determine, based on fwd-load-balance IsOneself in Table 3, whether the first target link interface that is represented by N and that is configured to forward the multicast packet is a local interface. If N is a local interface, the network device performs step 350. If N is not a local interface, the network device performs step 360.

Optionally, fwd-load-balance IsOneself in Table 3 may be a bit string (BitString) with L bits, and is represented as IsOneself<BitString> or IsOneself<BS>. In a possible implementation, bits from the right to the left in the BitString successively represent whether an interface of a device 1 is local and whether an interface of a device 2 is local. In another possible implementation, bits from left to right in the BitString successively represent whether an interface of a device 1 is local and whether an interface of a device 2 is local. Table 3 may also be represented as (fwd-lb-ID, IsOneself<BS>).

L is a positive integer greater than 1. It should be understood that L may have a same value as K above.

Optionally, fwd-load-balance IsOneself in Table 3 may be a list (List) with L members, and is represented as IsOneself<List> or IsOneself<LS>. The first element value of List represents whether an interface 1 is a local interface, and the second element of List represents whether an interface 2 is a local interface. Table 3 may also be represented as (fwd-lb-ID, IsOneself<LS>).

For ease of description, Table 3 (fwd-lb-ID, IsOneself<BS>) is used as an example for description in the following.

Step 350: The network device sends the multicast packet.

Step 360: The network device discards the multicast packet.

Step 370: The network device determines, based on Table 4, whether a quantity of available members in the load balancing group is 0.

It should be understood that if the network device determines, in step 330, that the state of the first target link interface that is represented by N and that is configured to forward the multicast packet is available, the network device may further select one of available members in the load balancing group to forward the multicast packet.

Optionally, the network device may determine, based on Table 4, whether the quantity of available members in the load balancing group is 0. If the quantity of available members in the load balancing group indicated in Table 4 is 0, it may be understood that there is no member in the available state in the load balancing group, and the network device performs step 380. If the quantity of available members in the load balancing group in Table 4 is not 0, it may be understood that there is a member in the available state in the load balancing group, and the network device performs step 390.

Table 4 in this embodiment of this application may be (fwd-load-balance ID, active-load-balance-number). active-load-balance-number represents a quantity of members in the available state in the load balancing group. The network device may determine, based on active-load-balance-number, whether a quantity of available members in the load balancing group is 0.

It should be understood that a link interface in the available state may also be understood as an active link interface. That is, the link interface may be used to forward a packet.

For example, in the scenario shown in FIG. 1, if the load balancing group includes the router R1 and the router R2, active-load-balance-number in this embodiment of this application may be 0, 1, or 2. When active-load-balance-number is 2, values of two bits in State<BS> in Table 2 (fwd-lb-ID, State<BS>) are 1. When active-load-balance-number is 1, a value of one bit in State<BS> in Table 2 (fwd-lb-ID, State<BS>) is 1. When active-load-balance-number is 0, all bits in State<BS> in Table 2 (fwd-lb-ID, State<BS>) are 0.

It should be understood that active-load-balance-number may also be referred to as act-lb-num for short. Table 4 may also be represented as (fwd-lb-ID, act-lb-num).

Step 380: The network device sends the multicast packet.

Step 390: The network device performs a second modulo operation based on Table 4, to obtain a calculation result M.

For example, the network device may perform Hash2<SG>% act_lb_num +1 calculation, to obtain the calculation result M.

Hash2<SG> represents that hash calculation is performed on a field in the multicast packet. Hash2 and Hash1 may be the same, or may be different. This is not specifically limited in this application. "% act lb num" represents that a modulo operation or an integer remainder operation is performed on the quantity of members in the available state in the load balancing group in Table 4 based on a hash calculation result (Hash2<SG>). M represents the M^{th} available member in the members in the available state that are in the load balancing group and that forward the multicast packet.

Specifically, in a possible implementation, bits from right to left in the BS successively represent whether an interface state of a device 1 is up or down and whether an interface state of a device 2 is up or down. The network device may traverse bits 1 in State<BS> from right to left, and a bit location of the M^{th} bit 1 that is traversed is a device interface sequence number. In another possible implementation, bits from left to right in the BS successively represent whether an interface state of a device 1 is up or down and whether an interface state of a device 2 is up or down. The network device may traverse bits 1 in State<B S> from left to right, and a bit location of the M^{th} bit 1 that is traversed is a device interface sequence number.

For ease of description, an example in which the network device traverses the bits 1 in the State<BS> from right to left is used. For example, in this example, if BitString is 10, a location of the first bit 1 is 2, and a corresponding device interface is an interface of the R2. If BitString is 01, a location of the first bit 1 is 1, and a corresponding device interface is an interface of the R1.

It should be noted that specific representation forms of Table 1 to Table 4 described above are not limited in this embodiment of this application. Table 1 to Table 4 may also be a combined table, for example:
Table 5: (fwd-load-balance ID, cfg-load-balance-number, fwd-load-balance State, fwd-load-balance IsOneself, active-load-balance-number);
or simplified to:
   Table 6: (fwd-lb-ID, cfg-lb-num, State<BitString>, IsOneself<BitString>, act-lb-num);
   or simplified to:
Table 7: (fwd-lb-ID, cfg-lb-num, State<BS>, IsOneself<BS>, act-lb-num).

Step 391: The network device determines, based on Table 3, whether the M^{th} available member interface that is represented by M and that is configured to forward the multicast packet is a local interface.

The network device may determine, based on fwd-load-balance IsOneself in Table 3, whether the M^{th} available member interface that is represented by M and that is configured to forward the multicast packet is a local interface. If M is a local interface, the network device performs step 392. If M is not a local interface, the network device performs step 393.

A specific determining method corresponds to the method in step 340. For details, refer to the description in step 340. Details are not described herein again.

Step 392: The network device sends the multicast packet.

Step 393: The network device discards the multicast packet.

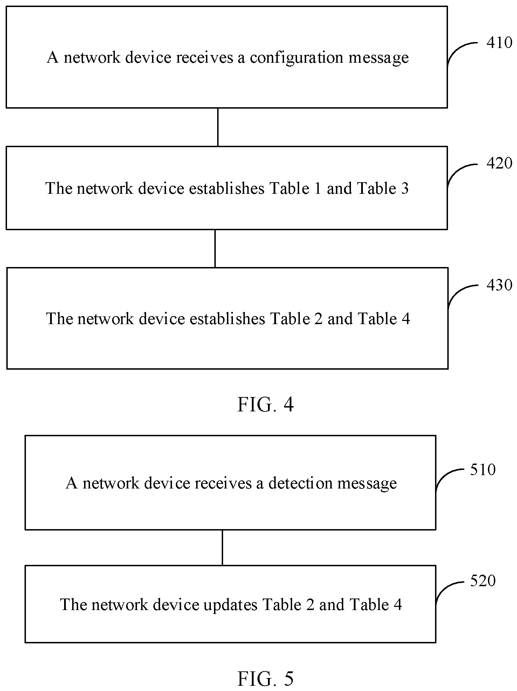

In this application, when a link is not faulty (or initialized), members participating in load balancing may be configured, so that the members establish Table 1 to Table 4, and perform load balancing according to the method described in FIG. 3 and based on Table 1 to Table 4. When a link is faulty, the R1 and the R2 need to update only respective State<BS> and act lb_num, so that packet load balancing can be performed on the multicast packet again based on updated entries. When only two links work in a load balancing mode, if one link is faulty, all traffic is copied and forwarded through the other available path. The two devices may keep state update of members in the load balancing group the same, and use a same hash algorithm. The following describes a specific procedure with reference to FIG. 4 to FIG. 5.

FIG. 4 is a schematic flowchart of a load balancing entry establishment method according to an embodiment of this application. The method includes steps 410 to 430. The following separately describes steps 410 to 430 in detail.

Step 410: A network device receives a configuration message.

It should be understood that the network device may be the router R1/router R2 described above. Configuration messages in different application scenarios are different. The following describes the configuration messages in different application scenarios in detail. Details are not described herein.

Step 420: The network device establishes Table 1 and Table 3.

The network device may establish Table 1 and Table 3 above based on the configuration message received in step 410.

Step 430: The network device establishes Table 2 and Table 4.

The network device may establish Table 2 and Table 4 above based on the configuration message received in step 410.

It should be noted that there is no sequence relationship between step 420 and step 430. Step 420 may be performed before step 430. Alternatively, step 430 may be performed before step 420. Alternatively, step 420 and step 430 are simultaneously performed. This is not limited in this application.

FIG. 5 is a schematic flowchart of a load balancing entry updating method according to an embodiment of this application. The method includes steps 510 and 520. The following separately describes steps 510 and 520 in detail.

Step 510: A network device receives a detection message.

The network device may receive the detection message, and determine an interface state of another member in a load balancing group based on the detection message. Specifically, the detection message may be a PIM Hello packet or a BFD detection result. For details, refer to the foregoing description. Details are not described herein again.

Step 520: The network device updates Table 2 and Table 4.

If the network device determines that a link of a member in the load balancing group is faulty, the network device may update Table 2 and Table 4. For example, the network device may update fwd-load-balance state in Table 2 (fwd-load-balance ID, fwd-load-balance state), and update a value of a bit corresponding to a link interface of the member in fwd-load-balance state. For another example, the network device may update active-load-balance-number in Table 4 (fwd-load-balance ID, active-load-balance-number), and update active-load-balance-number based on a current quantity of available link interfaces in the load balancing group.

The foregoing describes a multicast packet forwarding rule. With reference to the application scenario shown in FIG. 1, the following describes in detail a specific implementation process in which a network device forwards a packet based on the multicast packet forwarding rule in embodiments of this application.

In a first possible implementation, refer to FIG. 1. The load balancing group includes the router R1 and the router R2, the interfaces between the switch and the router R1 and the router R2 are configured as layer-2 ports (layer-2 ports), and the multicast source transmits a multicast flow to the router R1 and the router R2 through a PIM network or an MVPN.

Step 1: Configure on the R1 and the R2, so that the R1 and the R2 can establish Table 1 to Table 4 described above.

There are a plurality of specific manners for configuring on the R1 and the R2 in this embodiment of this application. The following describes several possible configurations in detail.

For example, possible configurations on the R1 and the R2 are as follows:
Configuration on #R1
Multicast forwarding-load-balance grpxxx id 200 [number 2]
   192.168.1.11 (member 1)
   192.168.1.12 (member 2)
Interface gi1/0/1
   Ip addr 192.168.1.11
   Pim sm
   Pim force-dr
   forwarding-load-balance grpxxx id 200
Configuration on #R2
Multicast forwarding-load-balance grpxxx id 200 [number 2]
   192.168.1.11 (member 1)
   192.168.1.12 (member 2)
Interface gi1/0/1
   Ip addr 192.168.1.12
   Pim sm
   Pim force-dr
   forwarding-load-balance grpxxx id 200

"Multicast forwarding-load-balance grpxxx id 200 [number 2]" represents a load balancing group grpxxx id 200. "192.168.1.11 (member 1)" and "192.168.1.12 (member 2)" respectively represent that the router R1 serves as a member 1 in the load balancing group, the router R2 serves as a member 2 in the load balancing group. The R1 is identified by 192.168.1.11, and the R2 is identified by 192.168.1.12. It should be noted that [number] is an optional configuration, and [number 2] may be automatically generated based on a list below [number] and represent that a quantity of members participating in load balancing is 2. [number] may also be configured as another value, for example, [number 8]. In this way, when a device is subsequently added, if a total quantity of members participating in load balancing does not exceed the configured value, a configuration of a first parameter of the load balancing may not need to be changed, and a member participating in load balancing is added.

"Interface gi1/0/1" represents a device interface participating in load balancing. "Ip addr 192.168.1.11" represents a configured interface address. "Pim sm" represents that the PIM protocol is enabled on the interface. After this command line is configured, the R1 can send a PIM Hello packet to the R2 through the switch, and the R1 can also receive a PIM Hello packet from R2 through the switch. "Pim force-dr" represents that the interface is always a DR. For received downstream multicast join, not only a multicast downstream state is generated, but also the multicast join is sent to an upstream Src side. "forwarding-load-balance grpxxx" represents that the interface uses the load balancing group grpxxx for load balancing forwarding.

It should be understood that the routers R1 and R2 are connected to the multicast receiver through one switch. When the PIM protocol is enabled on an interface of the R1, a PIM Hello packet is sent through the switch and received by the R2. Similarly, when the PIM protocol is enabled on an interface of the R2, a PIM Hello packet is sent through the switch and received by the R1. PIM designated router (designated router, DR) selection may be performed between the R1 and the R2. In this embodiment of this application, "Pim force-dr" is configured for the R1 and the R2. The interfaces of the R1 and the R2 are DRs. The R1 and the R2 may set downstream states of multicast entries to DRs, and both send multicast join to the multicast source Src, to direct multicast traffic to the R1 and the R2.

For another example, possible configurations on the R1 and the R2 are as follows:
Configuration on #R1
Multicast forwarding-load-balance grpxxx id 200 [number 8]
Interface gi1/0/1
   Ip addr 192.168.1.11
   Pim sm
   Pim force-dr
   forwarding-load-balance grpxxx id 200 member 1
Configuration on #R2
Multicast forwarding-load-balance grpxxx id 200 [number 8]
Interface gi1/0/1
   Ip addr 192.168.1.12
   Pim sm
   Pim force-dr
   forwarding-load-balance grpxxx member 2

"Multicast forwarding-load-balance grpxxx id 200 [number 8]" represents a load balancing group and supports a maximum of eight load balancing channels. Number 8 may not be configured. For example, when all devices share a default value of 8, number 8 may not be configured. "id 200" represents an identity of the load balancing group, and represents the same load balancing group when devices send messages between each other, so that the device receiving messages corresponds to the load balancing group of the local device. "forwarding-load-balance grpxxx member X" means that the interface uses a load balancing group grpxxx for load balancing forwarding, and the interface of the device serves as the X^{th} member in the load balancing group. Other configurations are similar to the foregoing configurations. For details, refer to the foregoing description. Details are not described herein again.

It should be understood that in this configuration, identities of all members in a load balancing group and member sequence numbers of all load balancing devices do not need to be configured on a device, which is simpler than the previous configuration manner. However, in this simple configuration method, a member sequence number of a device needs to be notified to another device participating in load balancing by using a message between the devices. For example, the R1 may notify, by using a PIM Hello message, the R2 that a sequence number of the R1 is 1, and the R2 may notify, by using a PIM Hello message, the R1 that a sequence number of the R2 is 2.

Specifically, the R1 and the R2 may send, to each other, load balancing group member information (for example, member=X) corresponding to a load balancing group identity id 200 and member state information (for example, state=UP/DOWN). For example, the R1 and the R2 may send the load balancing group member information and the member state information to each other by using the PIM Hello messages, so that the R1/R2 generates the foregoing load balancing forwarding entries.

Step 2: According to the foregoing configurations, the R1 and the R2 establish a "PIM DR" state of the interface as DR when receiving the PIM Hello packets. For received IGMP multicast join, a downstream egress interface of a multicast entry is established and the multicast join is sent to an upstream Src direction.

Step 3: The R1 and the R2 establish the following load balancing forwarding entries based on the configuration information.

A format of Table 7 described above is used as an example, and load balancing forwarding entries established by the R1 are as follows:
(fwd-lb-ID=200, cfg-lb-num=2, State<BS>=11, IsOneself<BS>=01, act-lb-num=2).

fwd-lb-ID=1 represents that a current identity of the load balancing group is 1. cfg-lb-num=2 represents that two devices participate in load balancing in the load balancing group, that is, the R1 and the R2. Bits from right to left in the State<BS>=11 successively represent an interface state of the R1. Abit 1 represents that an interface state is up, and a bit 0 represents that an interface state is down. Therefore, State<B S>=11 represents that the interface state of the R1 is up, and the interface state of the R2 is up. Bits from right to left in IsOneself<BS>=01 successively represent whether an interface of the R1 is local and whether an interface of the R2 is local. A bit 1 represents that an interface is local, and a bit 0 represents that an interface is not local. Therefore, IsOneself<BS>=01 represents that the interface of the R1 is local and the interface of the R2 is not local. act-lb-num=2 represents that two available devices participate in load balancing in the load balancing group, that is, the states of both the R1 and the R2 are up.

Similarly, load balancing forwarding entries established by the R2 are as follows:
(fwd-lb-ID=200, cfg-lb-num= 2, State<BS>=11, IsOneself<BS>=10, act-lb-num=2).

fwd-lb-ID=200 represents that a current identity of the load balancing group is 200. cfg-lb-num=2 represents that two devices participate in load balancing in the load balancing group, that is, the R1 and the R2. State<BS>=11 represents that an interface state of the R1 is up and an interface state of the R2 is up. IsOneself<BS>=10 represents that an interface of the R1 is not local, and an interface of the R2 is not local. act-lb-num=2 represents that two available devices participate in load balancing in the load balancing group, that is, the states of both the R1 and the R2 are up.

Step 4: The R1 and the R2 determine, according to the multicast packet forwarding rule in FIG. 3, whether to forward received multicast packets.

For example, the multicast packet received by the R1 is X1-X500. The R1 performs first hash calculation on the received multicast packet, and performs a modulo operation or an integer remainder operation on cfg-lb-num=2 based on a hash calculation result, to obtain a calculation result N=1. The R1 determines, based on State<BS>=11, that a value of the (N=1)^{th} bit from right to left in State<BS> is 1. Therefore, a device state corresponding to N=1 is up. The R1 then determines, based on IsOneself<BS>=01, that a value of the (N=1)^{th} bit from right to left in IsOneself<BS> is 1. Therefore, a device interface corresponding to N=1 is a local interface. The R1 may forward the multicast packet.

Similarly, it is assumed that the multicast packet received by the R2 is also X1-X500. The R2 performs first hash calculation on the received multicast packet, and performs a modulo operation or an integer remainder operation on cfg-lb-num=2 based on a hash calculation result, to obtain a calculation result N=1. The R2 determines, based on State<BS>=11, that a value of the (N=1)^{th} bit from right to left in State<BS> is 1. Therefore, a device state corresponding to N=1 is up. The R2 then determines, based on IsOneself<BS>=10, that a value of the (N=1)^{th} bit from right to left in IsOneself<BS> is 0. Therefore, a device interface corresponding to N=1 is not a local interface. The R2 may discard the multicast packet.

For another example, it is assumed that the multicast packet received by the R1 is X501-X1000. The R1 performs first hash calculation on the received multicast packet, and performs a modulo operation or an integer remainder operation on cfg-lb-num=2 based on a hash calculation result, to obtain a calculation result N=2. The R1 determines, based on State<BS>=11, that a value of the (N=2)^{th} bit from right to left in State<BS> is 1. Therefore, a device state corresponding to N=2 is up. The R1 then determines, based on IsOneself<BS>=01, that a value of the (N=2)^{th} bit from right to left in IsOneself<BS> is 0. Therefore, a device interface corresponding to N=2 is not a local interface. The R1 may discard the multicast packet.

Similarly, it is assumed that the multicast packet received by the R2 is also X501-X1000. The R2 performs first hash calculation on the received multicast packet, and performs a modulo operation or an integer remainder operation on cfg-lb-num=2 based on a hash calculation result, to obtain a calculation result N=2. The R2 determines, based on State<BS>=11, that a value of the (N=2)^{th} bit from right to left in State<BS> is 1. Therefore, a device state corresponding to N=1 is up. The R2 then determines, based on IsOneself<BS>=10, that a value of the (N=2)^{th} bit from right to left in IsOneself<BS> is 1. Therefore, a device interface corresponding to N=2 is a local interface. The R2 may forward the multicast packet.

In the foregoing technical solution, when there is no link fault, based on results of the first hash and the modulo operation, some multicast packets are forwarded by the R1 and discarded on the R2, and some other multicast packets are forwarded by the R2 and discarded on the R1, to implement load balancing.

Optionally, if the R1 determines that an R2-SW link is faulty, the format of Table 7 described above is used as an example, and the R1 and the R2 may correspondingly update the established load balancing forwarding entries. It should be understood that the R1 may determine, through BFD detection between the R1 and the R2, whether the R2-SW link is faulty. For example, the BFD detection is established between the R1 and the R2. The R1 senses that an R1-SW link state is up and the BFD detection is down. In this case, it may be determined that the R2-SW link is faulty. For details, refer to the foregoing description of the BFD. Details are not described herein again.

Updated load balancing forwarding entries of the R1 are as follows:
(fwd-lb-ID=200, cfg-lb-num=2, State<BS>=01, IsOneself<BS>=01, act-lb-num=1).

Bits from right to left in the State<BS>=01 successively represent the interface state of the R1. A bit 1 represents that an interface state is up, and a bit 0 represents that an interface state is down. Therefore, State<BS>=01 represents that the interface state of the R1 is up, and the interface state of the R2 is down. act-lb-num=1 represents that one available device participate in load balancing in the load balancing group.

Updated load balancing forwarding entries of the R2 are as follows:
(fwd-lb-ID=200, cfg-lb-num=2, State<BS>=01, IsOneself<BS>=10, act-lb-num=1).

The R1 and the R2 determine, based on the updated load balancing forwarding entries and the multicast packet forwarding rule in FIG. 3, whether to forward received multicast packets.

For example, the multicast packet received by the R1 is X1-X500. The R1 performs first hash calculation on the received multicast packet, and performs a modulo operation or an integer remainder operation on cfg-lb-num=2 based on a hash calculation result, to obtain a calculation result N=1. The R1 determines, based on State<BS>=01, that a value of the (N=1)^{th} bit from right to left in State<BS> is 1. Therefore, a device state corresponding to N=1 is up. The R1 then determines, based on IsOneself<BS>=01, that a value of the (N=1)^{th} bit from right to left in IsOneself<BS> is 1. Therefore, a device interface corresponding to N=1 is a local interface. The R1 may forward the multicast packet.

Similarly, it is assumed that the multicast packet received by the R2 is also X1-X500. The R2 performs first hash calculation on the received multicast packet, and performs a modulo operation or an integer remainder operation on cfg-lb-num=2 based on a hash calculation result, to obtain a calculation result N=1. The R2 determines, based on State<BS>=01, that a value of the first bit from right to left in State<BS> is 1. Therefore, a device state corresponding to N=1 is up. The R2 then determines, based on IsOneself<BS>=10, that a value of the first bit from right to left in IsOneself<BS> is 0. Therefore, a device interface corresponding to N=1 is not a local interface. The R2 may discard the multicast packet.

For another example, it is assumed that the multicast packet received by the R1 is X501-X1000. The R1 performs first hash calculation on the received multicast packet, and performs a modulo operation or an integer remainder operation on cfg-lb-num=2 based on a hash calculation result, to obtain a calculation result N=2. The R1 determines that a value of the (N=2)^{th} bit in State<BS>=01 is 0. Therefore, a device state corresponding to N=2 is down. Therefore, the R1 performs second hash calculation on the received multicast packet, and performs a modulo operation or an integer remainder operation on act-lb-num=1 based on a hash calculation result. It is assumed that a calculation result M=1 is obtained. The R1 searches for a location of the (M=1)^{th} bit 1 based on State<BS>=01, to obtain a result 1. The R1 then determines that a value of the first bit from right to left in IsOneself<BS>=01 is 1. Therefore, a device interface corresponding to M=1 is a local interface. The R1 may forward the multicast packet.

Similarly, it is assumed that the multicast packet received by the R2 is X501-X1000. The R2 performs first hash calculation on the received multicast packet, and performs a modulo operation or an integer remainder operation on cfg-lb-num=2 based on a hash calculation result, to obtain a calculation result N=2. The R2 determines that avalue of the (N=2)^{th} bit in State<BS>=01 is 0. Therefore, a device state corresponding to N=2 is down. Therefore, the R2 performs second hash calculation on the received multicast packet, and performs a modulo operation or an integer remainder operation on act-lb-num= 1 based on a second hash calculation result. It is assumed that a calculation result M=1 is obtained. The R2 searches for a location of the (M=1)^{th} bit 1 based on State<BS>=01, to obtain a result 1. The R2 then determines that a value of the first bit from right to left in IsOneself<BS>=10 is 0. Therefore, a device interface corresponding to M=1 is not a local interface. The R2 may discard the multicast packet.

In the foregoing solution, when a link is faulty, the R1 and the R2 need to update only respective State<BS> and act lb num, so that packet load balancing can be performed on the multicast packet again based on updated entries. When only two links work in a load balancing mode, if one link is faulty, all traffic is copied and forwarded through the other available path. The two devices may keep state update of members in the load balancing group the same, and use a same hash algorithm.

In a second possible implementation, refer to FIG. 1. The load balancing group includes the router R1, the router R2, and the router R3. Interfaces between the switch and the router R1, the router R2, and the router R3 are configured as layer-2 ports (layer-2 ports), and multicast flows are transmitted between the multicast source and the router R1, the router R2, and the router R3 through a PIM network or an MVPN.

Step 1: Configure on the R1, the R2, and the R3, so that the R1, the R2, and the R3 can establish Table 1 to Table 4 described above.

There are a plurality of specific manners for configuring on the R1, the R2, and the R3 in this embodiment of this application. The following describes several possible configurations in detail.

For example, possible configurations on the R1, the R2, and the R3 are as follows:
Configuration on #R1
Multicast forwarding-load-balance grpxxx id 200 [number 3]
   192.168.1.11 (member 1)
   192.168.1.12 (member 2)
   192.168.1.13 (member 3)
Interface gi1/0/1
   Ip addr 192.168.1.11
   Pim sm
   Pim force-dr
   forwarding-load-balance grpxxx id 200
Configuration on #R2
Multicast forwarding-load-balance grpxxx id 200 [number 3]
   192.168.1.11 (member 1)
   192.168.1.12 (member 2)
   192.168.1.13 (member 3)
Interface gi1/0/1
   Ip addr 192.168.1.12
   Pim sm
   Pim force-dr
   forwarding-load-balance grpxxx id 200
Configuration on #R3
Multicast forwarding-load-balance grpxxx id 200 [number 3]
   192.168.1.11 (member 1)
   192.168.1.12 (member 2)
   192.168.1.13 (member 3)
Interface gi1/0/1
   Ip addr 192.168.1.13
   Pim sm
   Pim force-dr
   forwarding-load-balance grpxxx id 200

In the foregoing configurations, a member ID may be configured for each member link, to correspond to bit locations in a link state State<B S> list and an IsOneself list. It should be understood that this configuration may be an explicit configuration, or may be an implicit configuration, or may be automatically generated without configuration. That is, if a member ID configured for each member link is not displayed, the member ID of each member link needs to be determined. A correspondence between a link object and a link member ID always exists. The link member ID is used to determine a subscript of the link in the State<BS> list or the IsOneself list.

This corresponds to the configuration information in the first possible implementation. For details, refer to the description of the configuration information in the first possible implementation. Details are not described herein again.

For another example, other possible configurations on the R1, the R2, and the R3 are as follows:
Configuration on #R1
Multicast forwarding-load-balance grpxxx id 200 [number 8]
Interface gi1/0/1
   Ip addr 192.168.1.11
   Pim sm
   Pim force-dr
   forwarding-load-balance grpxxx id 200 member 1
Configuration on #R2
Multicast forwarding-load-balance grpxxx id 200 [number 8]
Interface gi1/0/1
   Ip addr 192.168.1.12
   Pim sm
   Pim force-dr
   forwarding-load-balance grpxxx id 200member 2
Configuration on #R3
Multicast forwarding-load-balance grpxxx id 200 [number 8]
Interface gi1/0/1
   Ip addr 192.168.1.13
   Pim sm
   Pim force-dr
   forwarding-load-balance grpxxx id 200 member 3

In the foregoing configurations, each device (R1/R2/R3) configures only its own link member ID (but the configured link member IDs cannot overlap). Each device needs to notify its own member ID by using a control plane protocol, and each device also receives ID information of another member, to finally construct State<BS> and IsOneself lists.

This corresponds to the configuration information in the first possible implementation. For details, refer to the description of the configuration information in the first possible implementation. Details are not described herein again.

It should be understood that, in the foregoing configurations, a quantity 8 of load balancing links in Multicast forwarding-load-balance grpxxx id 200 [number 8] is greater than a quantity of device links actually participating in load balancing. When a device is subsequently added, if a total quantity of members participating in load balancing does not exceed the configured value, a configuration of a first parameter of the load balancing may not need to be changed, and a member participating in load balancing is added.

It should be further understood that the quantity 8 of load balancing links in the foregoing configuration [number 8] is used as an example. In this embodiment of this application, the quantity of load balancing links may be greater than or equal to the quantity of device links actually participating in load balancing.

Step 2: According to the foregoing configurations, the R1, the R2, and the R3 establish a "PIM DR" state of the interface as DR when receiving the PIM Hello packets. For received IGMP multicast join, a downstream egress interface of a multicast entry is established and the multicast join is sent to an upstream Src direction.

Step 3: The R1, the R2, and the R3 establish the following load balancing forwarding entries based on the configuration information.

A format of Table 7 described above is used as an example, and load balancing forwarding entries established by the R1 are as follows:
(fwd-lb-ID=200, cfg-lb-num=8, State<BS>=00000111, IsOneself<BS>=00000001, act-lb-num=3).

The format of Table 7 described above is used as an example, and load balancing forwarding entries established by the R2 are as follows:
(fwd-lb-ID=200, cfg-lb-num=8, State<BS>=00000111, IsOneself<BS>=00000010, act-lb-num=3).

The format of Table 7 described above is used as an example, and load balancing forwarding entries established by the R3 are as follows:
(fwd-lb-ID=200, cfg-lb-num=8, State<BS>=00000111, IsOneself<BS>=00000100, act-lb-num=3).

Step 4: The R1, the R2, and the R3 determine, based on the respective established load balancing forwarding entries and the multicast packet forwarding rule in FIG. 3, whether to forward received multicast packets.

For example, the multicast packet received by the R1 is X1-X500. The R1 performs first hash calculation on the received multicast packet, and performs a modulo operation or an integer remainder operation on cfg-lb-num=8 based on a hash calculation result, to obtain a calculation result N=1. The R1 determines, based on State<BS>=00000111, that a value of the (N=1)^{th} bit from right to left in State<BS> is 1. Therefore, a device state corresponding to N=1 is up. The R1 then determines, based on IsOneself<BS>=00000001, that a value of the (N=1)^{th} bit from right to left in IsOneself<BS> is 1. Therefore, a device interface corresponding to N=1 is a local interface. The R1 may forward the multicast packet.

Similarly, it is assumed that the multicast packet received by the R2 is also X1-X500. The R2 performs first hash calculation on the received multicast packet, and performs a modulo operation or an integer remainder operation on cfg-lb-num=8 based on a hash calculation result, to obtain a calculation result N=1. The R2 determines, based on State<BS>=00000111, that a value of the (N=1)^{th} bit from right to left in State<BS> is 1. Therefore, a device state corresponding to N=1 is up. The R2 then determines, based on IsOneself<BS>=00000010, that a value of the (N=1)^{th}bit from right to left in IsOneself<BS> is 0. Therefore, a device interface corresponding to N=1 is not a local interface. The R2 may discard the multicast packet.

Similarly, it is assumed that the multicast packet received by the R3 is also X1-X500. The R3 performs first hash calculation on the received multicast packet, and performs a modulo operation or an integer remainder operation on cfg-lb-num=8 based on a hash calculation result, to obtain a calculation result N=1. The R3 determines, based on State<BS>=00000111, that a value of the (N=1)^{th} bit from right to left in State<BS> is 1. Therefore, a device state corresponding to N=1 is up. The R3 then determines, based on IsOneself<BS>=00000100, that a value of the (N=1)^{th}bit from right to left in IsOneself<BS> is 0. Therefore, a device interface corresponding to N=1 is not a local interface. The R3 may discard the multicast packet.

For another example, it is assumed that the multicast packet received by the R1 is X501-X1000. The R1 performs first hash calculation on the received multicast packet, and performs a modulo operation or an integer remainder operation on cfg-lb-num=8 based on a hash calculation result, to obtain a calculation result N=2. The R1 determines, based on State<BS>=00000111, that a value of the (N=2)^{th} bit from right to left in State<BS> is 1. Therefore, a device state corresponding to N=2 is up. The R1 then determines, based on IsOneself<BS>=00000001, that a value of the (N=2)^{th} bit from right to left in IsOneself<BS> is 0. Therefore, a device interface corresponding to N=2 is not a local interface. The R1 may discard the multicast packet.

Similarly, it is assumed that the multicast packet received by the R2 is X501-X1000. The R2 performs first hash calculation on the received multicast packet, and performs a modulo operation or an integer remainder operation on cfg-lb-num=8 based on a hash calculation result, to obtain a calculation result N=2. The R2 determines, based on State<BS>=00000 111, that a value of the (N=2)^{th} bit from right to left in State<B S> is 1. Therefore, a device state corresponding to N=2 is up. The R2 then determines, based on IsOneself<BS>=00000010, that a value of the (N=2)^{th} bit from right to left in IsOneself<BS> is 1. Therefore, a device interface corresponding to N=2 is a local interface. The R2 may forward the multicast packet.

Similarly, it is assumed that the multicast packet received by the R3 is X501-X1000. The R3 performs first hash calculation on the received multicast packet, and performs a modulo operation or an integer remainder operation on cfg-lb-num=8 based on a hash calculation result, to obtain a calculation result N=2. The R3 determines, based on State<BS>=00000111, that a value of the (N=2)^{th} bit from right to left in State<B S> is 1. Therefore, a device state corresponding to N=2 is up. The R3 then determines, based on IsOneself<BS>=00000100, that a value of the (N=2)^{th} bit from right to left in IsOneself<BS> is 0. Therefore, a device interface corresponding to N=2 is not a local interface. The R3 may discard the multicast packet.

For another example, it is assumed that the multicast packet received by the R1 is X1001-X1500. The R1 performs first hash calculation on the received multicast packet, and performs a modulo operation or an integer remainder operation on cfg-lb-num=8 based on a hash calculation result, to obtain a calculation result N=3. The R1 determines, based on State<BS>=00000111, that a value of the (N=3)^{th} bit from right to left in State<BS> is 1. Therefore, a device state corresponding to N=3 is up. The R1 then determines, based on IsOneself<BS>=00000001, that a value of the (N=3)^{th} bit from right to left in IsOneself<BS> is 0. Therefore, a device interface corresponding to N=3 is not a local interface. The R1 may discard the multicast packet.

Similarly, it is assumed that the multicast packet received by the R2 is XI001-XI500. The R2 performs first hash calculation on the received multicast packet, and performs a modulo operation or an integer remainder operation on cfg-lb-num=8 based on a hash calculation result, to obtain a calculation result N=3. The R2 determines, based on State<BS>=00000111, that a value of the (N=3)^{th} bit from right to left in State<BS> is 1. Therefore, a device state corresponding to N=3 is up. The R2 then determines, based on IsOneself<BS>=00000010, that a value of the (N=3)^{th} bit from right to left in IsOneself<BS> is 0. Therefore, a device interface corresponding to N=3 is not a local interface. The R2 may discard the multicast packet.

Similarly, it is assumed that the multicast packet received by the R3 is XI001-XI500. The R3 performs first hash calculation on the received multicast packet, and performs a modulo operation or an integer remainder operation on cfg-lb-num=8 based on a hash calculation result, to obtain a calculation result N=3. The R3 determines, based on State<BS>=00000111, that a value of the (N=3)^{th} bit from right to left in State<BS> is 1. Therefore, a device state corresponding to N=3 is up. The R3 then determines, based on IsOneself<BS>=00000100, that a value of the (N=3)^{th} bit from right to left in IsOneself<BS> is 1. Therefore, a device interface corresponding to N=3 is a local interface. The R3 may forward the multicast packet.

Optionally, if the R1 determines that an R2-SW link is faulty, the format of Table 7 described above is used as an example, and the R1, the R2, and the R3 may correspondingly update the established load balancing forwarding entries. Specifically, for example, the R1 may sense a state of an R1-SW link, a state of an R2-SW link, and a state of an R3-SW link. For example, BFD detection 1 is established between the R1 and the R2, and BFD detection 2 is established between the R1 and the R3. The R1 senses that the state of the R1-SW link is up, but the BFD detection 1 is down, and it may be determined that the R2-SW link is faulty. Alternatively, the R1 senses that the state of the R1-SW link is up, but the BFD detection 2 is down, and it may be determined that the R3-SW link is faulty. For details, refer to the foregoing description of the BFD. Details are not described herein again.

The format of Table 7 described above is used as an example. The R1, the R2, and the R3 may correspondingly update the established load balancing forwarding entries.

Updated load balancing forwarding entries of the R1 are as follows:
(fwd-lb-ID=200, cfg-lb-num=8, State<BS>=00000101, IsOneself<BS>=00000001, act-lb-num=2).

Updated load balancing forwarding entries of the R2 are as follows:
(fwd-lb-ID=200, cfg-lb-num=8, State<BS>=00000101, IsOneself<BS>=00000010, act-lb-num=2).

Updated load balancing forwarding entries of the R3 are as follows:
(fwd-lb-ID=200, cfg-lb-num=8, State<BS>=00000101, IsOneself<BS>=00000100, act-lb-num=2).

The R1, the R2, and the R3 may determine, based on the updated load balancing forwarding entries and the multicast packet forwarding rule in FIG. 3, whether to forward received multicast packets.

For example, the multicast packet received by the R1 is X1-X500, and the R1 forwards the multicast packet. For a specific determining process, refer to the foregoing description. Details are not described herein again. Similarly, the multicast packet received by the R2 is X1-X500, and the R2 may discard the multicast packet. For a specific determining process, refer to the foregoing description. Details are not described herein again. Similarly, the multicast packet received by the R3 is X1-X500, and the R3 may discard the multicast packet. For a specific determining process, refer to the foregoing description. Details are not described herein again.

For another example, the multicast packet received by the R1 is X501-X1000. The R1 performs first hash calculation on the received multicast packet, and performs a modulo operation or an integer remainder operation on cfg-lb-num=8 based on a hash calculation result, to obtain a calculation result N=2. The R1 determines that a value of the (N=2)^{th} bit in State<BS>=00000101 is 0. Therefore, a device state corresponding to N=2 is down. Therefore, the R1 performs second hash calculation on the received multicast packet, and performs a modulo operation or an integer remainder operation on act-lb-num=2 based on a second hash calculation result. It is assumed that a calculation result M=1 is obtained. The R1 searches for a location of the (M=1)^{th} bit 1 based on State<BS>=00000101, to obtain a result 1. The R1 then determines that a value of the first bit from right to left in IsOneself<BS>=00000001 is 1. Therefore, a device interface corresponding to M=1 is a local interface. The R1 may forward the multicast packet.

Similarly, the multicast packet received by the R2 is X501-X1000. The R2 performs first hash calculation on the received multicast packet, and performs a modulo operation or an integer remainder operation on cfg-lb-num=8 based on a hash calculation result, to obtain a calculation result N=2. The R2 determines that a value of the (N=2)^{th} bit in State<BS>=00000101 is 0. Therefore, a device state corresponding to N=2 is down. Therefore, the R2 performs second hash calculation on the received multicast packet, and performs a modulo operation or an integer remainder operation on act-lb-num=2 based on a second hash calculation result. It is assumed that a calculation result M=1 is obtained. The R2 searches for a location of the (M=1)^{th} bit 1 based on State<B S>=00000101, to obtain a result 1. The R1 then determines that a value of the first bit from right to left in IsOneself<BS>=00000010 is 0. Therefore, a device interface corresponding to M=1 is not a local interface. The R1 may discard the multicast packet.

Similarly, the multicast packet received by the R3 is X501-X1000, and the R3 may also discard the multicast packet. For a specific determining process, refer to the foregoing description. Details are not described herein again.

For another example, the multicast packet received by the R1 is X1001-X1500, and the R1 may discard the multicast packet. Similarly, the multicast packet received by the R2 is X1001-X1500, and the R2 may also discard the multicast packet. Similarly, the multicast packet received by the R3 is X1001-X1500, and the R3 forwards the multicast packet. For a specific determining process, refer to the foregoing description. Details are not described herein again.

In a third possible implementation, refer to FIG. 1. The load balancing group includes the router R1, the router R2, and the router R3. Interfaces between the switch and the router R1, the router R2, and the router R3 are configured as eth-trunk ports, and multicast flows are transmitted between the multicast source and the router R1, the router R2, and the router R3 through a PIM network or an MVPN.

Step 1: Configure on the R1, the R2, and the R3, so that the R1, the R2, and the R3 can establish Table 1 to Table 4 described above.

There are a plurality of specific manners for configuring on the R1, the R2, and the R3 in this embodiment of this application.

For example, possible configurations on the R1, the R2, and the R3 are as follows:
Configuration on #R1
Multicast forwarding-load-balance grpxxx esi 200 [number 8]
Interface eth-trunk1
   Trunkport gi1/0/1
   Ip addr 192.168.1.11
   Pim sm
   Pim force-dr
   forwarding-load-balance grpxxx esi 200member 1
Configuration on #R2
Multicast forwarding-load-balance grpxxx esi 200 [number 8]
Interface eth-trunk1
   Trunkport gi1/0/1
   Ip addr 192.168.1.12
   Pim sm
   Pim force-dr
   forwarding-load-balance grpxxx esi 200member 2
Configuration on #R3
Multicast forwarding-load-balance grpxxx esi 200 [number 8]
Interface eth-trunk1
   Trunkport gi1/0/1
   Ip addr 192.168.1.13
   Pim sm
   Pim force-dr
forwarding-load-balance grpxxx esi 200member 3
Configuration on #SW
Interface eth-trunk1
   Trunkport gi1/0/1 1/0/2 1/0/3

In the foregoing configuration manner, eth-trunk may be configured on the switch and three member ports are added, for example, Trunkport gi1/0/1 1/0/2 1/0/3. eth-trunk is configured on each of the R1, the R2, and the R3 and one member port is added, for example, "Interface eth-trunk1; Trunkport gi1/0/1" configured on the R1, "Interface eth-trunk1, Trunkport gi1/0/1" configured on the R2, and "Interface eth-trunk1, Trunkport gi1/0/1" configured on the R3.

It should be understood that eth-trunk on the R1, the R2, and the R3 may be configured with a same identity, for example, an Ethernet segment index (ethernet segment index, ESI) identity. The R1, the R2, and the R3 may send, to each other, load balancing group member information (for example, member=X) with an identity esi 200 and member state information (for example, state=UP/DOWN). For example, the R1, the R2, and the R3 may send the load balancing group member information and the member state information to each other by using BGP EVPN messages, so that the R1, the R2, and the R3 generate the foregoing load balancing forwarding entries.

Optionally, the load balancing group member information (for example, member=X) with the identity esi 200 and the member state information (for example, state=UP/DOWN) may be further configured on the R1, the R2, and the R3. The R1, the R2, and the R3 do not need to notify to each other by sending a message. For specific configuration, refer to the configuration method in the second possible implementation. Details are not described herein again.

Step 2: Based on the foregoing configurations, the R1, the R2, and the R3 cannot receive PIM Hello packets from each other. A PIM DR state of an interface of each of the R1, the R2, and the R3 is DR. Downstream multicast IGMP join is sent to one of the R1, the R2, and the R3 through the switch. In this embodiment of this application, the downstream multicast IGMP needs to be synchronized to another device, so that the R1, the R2, and the R3 each establish a downstream interface of a multicast entry and sends the multicast join to an upstream Src direction.

Step 3: The R1, the R2, and the R3 establish the following load balancing forwarding entries based on the configuration information.

This is similar to the method in the second possible implementation. For details, refer to the configuration method in the second possible implementation. Details are not described herein again.

Step 4: The R1, the R2, and the R3 determine, based on the respective established load balancing forwarding entries and the multicast packet forwarding rule in FIG. 3, whether to forward received multicast packets.

This is similar to the method in the second possible implementation. For details, refer to the configuration method in the second possible implementation. Details are not described herein again.

In a fourth possible implementation, refer to FIG. 1. The load balancing group includes the router R1, the router R2, and the router R3. Interfaces between the switch and the router R1, the router R2, and the router R3 are configured as eth-trunk ports, and multicast flows are transmitted between the multicast source and the router R1, the router R2, and the router R3 through an EVPN.

The R1, the R2, the R3, and the Rx may be EVPN PEs of a tenant, and a tenant network is a layer-2 network of a same network segment. For example, the Src and the Rcv are two hosts of a same network segment. The R1, the R2, and the R3 may enable an IGMP snooping function, receive an IGMP join packet sent by the downstream Rcv, and send the IGMP join packet to the Rx by using a BGP EVPN message. If the Rx receives multicast traffic, the Rx sends the multicast traffic to the R1, the R2 and the R3 through the EVPN.

Step 1: Configure on the R1, the R2, and the R3, so that the R1, the R2, and the R3 can establish Table 1 to Table 4 described above.

There are a plurality of specific manners for configuring on the R1, the R2, and the R3 in this embodiment of this application.

For example, possible configurations on the R1, the R2, and the R3 are as follows:
Configuration on #R1
Multicast forwarding-load-balance grpxxx esi 200 [number 8]
Interface eth-trunk1
   Trunkport gi1/0/1
   Bridge-domain 123
   Igmp snooping enable
   forwarding-load-balance grpxxx esi 200 member 1
Configuration on #R2
Multicast forwarding-load-balance grpxxx esi 200 [number 8]
Interface eth-trunk1
   Trunkport gi1/0/1
   Bridge-domain 123
   Igmp snooping enable
   forwarding-load-balance grpxxx esi 200 member 2
Configuration on #R3
Multicast forwarding-load-balance grpxxx esi 200 [number 8]
Interface eth-trunk1
   Trunkport gi1/0/1
   Bridge-domain 123
   Igmp snooping enable
   forwarding-load-balance grpxxx esi 200 member 3
Configuration on #SW
Interface eth-trunk1
   Trunkport gi1/0/1 1/0/2 1/0/3

trunkport gi1/0/1 represents that an Interface gi1/0/1 is added to eth-trunk as a member port, and one eth-trunk may have one or more member ports, for example, Trunkport gi1/0/1, Trunkport 1/0/2, and Trunkport 1/0/3. bridge-domain 123 represents that an eth-trunk port may be added to a bridge domain corresponding to a network segment of a tenant. Igmp snooping enable represents that an interface enables igmp snooping. After igmp snooping is enabled, the interface receives IGMP protocol packets and establishes multicast forwarding entries, for example, multicast forwarding entries of a multicast group (SI, G1, egress interface=interface 1).

It should be understood that eth-trunk on the R1, the R2, and the R3 may be configured with a same identity, for example, an ESI identity. The R1, the R2, and the R3 may send, to each other, load balancing group member information (for example, member=X) with an identity esi 200 and member state information (for example, state=UP/DOWN). For example, the R1, the R2, and the R3 may send the load balancing group member information and the member state information to each other by using BGP EVPN messages, so that the R1, the R2, and the R3 generate the foregoing load balancing forwarding entries.

Optionally, the load balancing group member information (for example, member=X) with the identity esi 200 and the member state information (for example, state=UP/DOWN) may be further configured on the R1, the R2, and the R3. The R1, the R2, and the R3 do not need to notify to each other by sending a message. For specific configuration, refer to the configuration method in the second possible implementation. Details are not described herein again.

Step 2: Based on the foregoing configurations, the R1, the R2, and the R3 cannot receive PIM Hello packets from each other. A PIM DR state of an interface of each of the R1, the R2, and the R3 is DR. Downstream multicast IGMP join is sent to one of the R1, the R2, and the R3 through the switch. In this embodiment of this application, the downstream multicast IGMP needs to be synchronized to another device, so that the R1, the R2, and the R3 each establish a downstream interface of a multicast entry and sends the multicast join to an upstream Src direction.

Step 3: The R1, the R2, and the R3 establish the following load balancing forwarding entries based on the configuration information.

This is similar to the method in the second possible implementation. For details, refer to the configuration method in the second possible implementation. Details are not described herein again.

Step 4: The R1, the R2, and the R3 determine, based on the respective established load balancing forwarding entries and the multicast packet forwarding rule in FIG. 3, whether to forward received multicast packets.

This is similar to the method in the second possible implementation. For details, refer to the configuration method in the second possible implementation. Details are not described herein again.

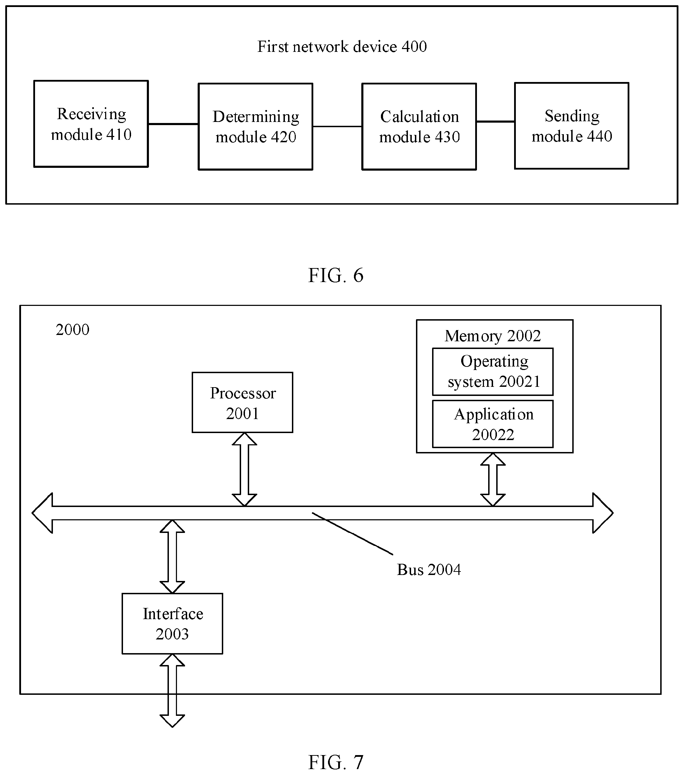

The foregoing describes in detail the packet sending method provided in embodiments of this application with reference to FIG. 1 to FIG. 5. The following describes in detail apparatus embodiments in this application with reference to FIG. 6 to FIG. 8. It should be understood that, description of the method embodiments corresponds to description of the apparatus embodiments. Therefore, for a part not described in detail, refer to the foregoing method embodiments.

FIG. 6 is a schematic diagram of a structure of a first network device 400 according to an embodiment of this application. The first network device 400 shown in FIG. 6 may perform the corresponding steps performed by the first network device in the methods in the foregoing embodiments. As shown in FIG. 6, the first network device 400 includes a receiving module 410, a determining module 420, a calculation module 430, and a sending module 440.

The receiving module 410 is configured to receive a first multicast packet.

The determining module 420 is configured to determine first information based on the first multicast packet, where the first information indicates an attribute of the first multicast packet.

The determining module 420 is further configured to determine that a state of a first link interface is unavailable, where the first link interface is for forwarding the first multicast packet in a load balancing manner.

The calculation module 430 is configured to perform a modulo operation on the first information based on a second parameter, to obtain second indication information, where the second indication information indicates a second link interface through which the first network device forwards the first multicast packet, the second parameter is a quantity of link interfaces whose states are available in the first load balancing group, the first load balancing group includes the first link interface and the second link interface, and a state of the second link interface is available.

The sending module 440 is configured to forward the first multicast packet through the second link interface.

Optionally, the first information includes one or more of the following: information about a source address of the first multicast packet, information about a destination address of the first multicast packet, information about the source address and the destination address of the first multicast packet, hash result information corresponding to the source address of the first multicast packet, hash result information corresponding to the information about the destination address of the first multicast packet, and hash result information corresponding to the information about the source address and the destination address of the first multicast packet.

Optionally, the calculation module 430 is further configured to perform a modulo operation on the first information based on a first parameter, to obtain first indication information, where the first indication information indicates the first link interface through which the first network device forwards the first multicast packet, and the first parameter is related to a quantity of link interfaces in the first load balancing group.

Optionally, the first parameter is greater than or equal to the quantity of link interfaces configured in the first load balancing group.

Optionally, the determining module 420 is further configured to determine that the state of the first link interface is available, and forward the first multicast packet through the first link interface.

Optionally, the determining module 420 is specifically configured to determine, based on states of the link interfaces in the first load balancing group, that the state of the first link interface is unavailable.

Optionally, the states of the link interfaces in the first load balancing group are a bit string with K bits, K is a positive integer greater than 1, a location of each bit in the bit string indicates one link interface in the first load balancing group, and a value of the bit indicates state information of the link interface.

The determining module 420 is specifically configured to determine, based on a value of a bit corresponding to the first link interface in the bit string, that the state of the first link interface is unavailable.

Optionally, the determining module 420 is further configured to determine, based on a first entry, that the first link interface is a link interface of the first network device, where the first entry indicates whether each link interface in the first load balancing group is a local interface.

Optionally, the first entry is a bit string with L bits or is L lists, L is a positive integer greater than 1, a location of each bit in the bit string indicates one link interface in the first load balancing group, and a value of the bit indicates whether the link interface is a local interface. The determining module 420 is specifically configured to determine, based on a value of a bit corresponding to the first link interface in the bit string of the first entry, that the first link interface is a link interface of the first network device.

Optionally, the receiving module 410 is further configured to receive configuration information, where the configuration information includes identities IDs of the link interfaces in the first load balancing group, and the IDs correspond to the bit string of the states of the link interfaces in the first load balancing group.

Optionally, the receiving module 410 is further configured to receive a message sent by each member in the first load balancing group, where the message includes one or more of the following: an identity of the first load balancing group, a state of a link interface of each member in the first load balancing group, and an ID of a link interface that is of each member in the first load balancing group and that is in the first load balancing group.

FIG. 7 is a schematic diagram of a hardware structure of a first network device 2000 according to an embodiment of this application. The first network device 2000 shown in FIG. 7 may perform the corresponding steps performed by the first network device in the methods in the foregoing embodiments.

As shown in FIG. 7, the first network device 2000 includes a processor 2001, a memory 2002, an interface 2003, and a bus 2004. The interface 2003 may be implemented in a wireless or wired manner, and may be specifically a network adapter. The processor 2001, the memory 2002, and the interface 2003 are connected through the bus 2004.

The interface 2003 may specifically include a transmitter and a receiver, and is configured for the first network device to implement the foregoing receiving and sending. For example, the interface 2003 is configured to receive a message sent by each member in a first load balancing group. For another example, the interface 2003 is configured to forward the first multicast packet.

The processor 2001 is configured to perform processing performed by the first network device in the foregoing embodiment, for example, determine first information based on the first multicast packet. The central processing unit 2111 is further configured to: determine that a state of the first link interface is unavailable, and perform a modulo operation on the first information based on a second parameter, to obtain second indication information; determine that the first link interface is a link interface of the first network device based on a value of a bit corresponding to the first link interface in a bit string of a first entry; determine, based on the first entry, that the first link interface is a link interface of the first network device; determine, based on a value of a bit corresponding to the first link interface in a bit string, that the state of the first link interface is unavailable; perform a modulo operation on the first information based on a first parameter, to obtain first indication information, where the first indication information indicates the first link interface through which the first network device forwards the first multicast packet; and/or another processes in the technology described herein. For example, the processor 2001 is configured to support step 210, step 220, step 230, and step 240 in FIG. 2. The memory 2002 includes an operating system 20021 and an application 20022, and is configured to store programs, code, or instructions. When executing the programs, the code, or the instructions, a processor or a hardware device may complete a processing process of the first network device in the method embodiments. Optionally, the memory 2002 may include a read-only memory (read-only memory, ROM) and a random access memory (random access memory, RAM). The ROM includes a basic input/output system (basic input/output system, BIOS) or an embedded system, and the RAM includes an application and an operating system. When the first network device 2000 needs to run, a bootloader in the BIOS or the embedded system that is built into the ROM is used to boot a system to start, and boot the first network device 2000 to enter a normal running state. After entering the normal running state, the first network device 2000 runs the application and the operating system in the RAM, to complete the processing processes of the first network device 2000 in the method embodiments.

It may be understood that FIG. 7 shows only a simplified design of the first network device 2000. In actual application, the first network device may include any quantity of interfaces, processors, or memories.

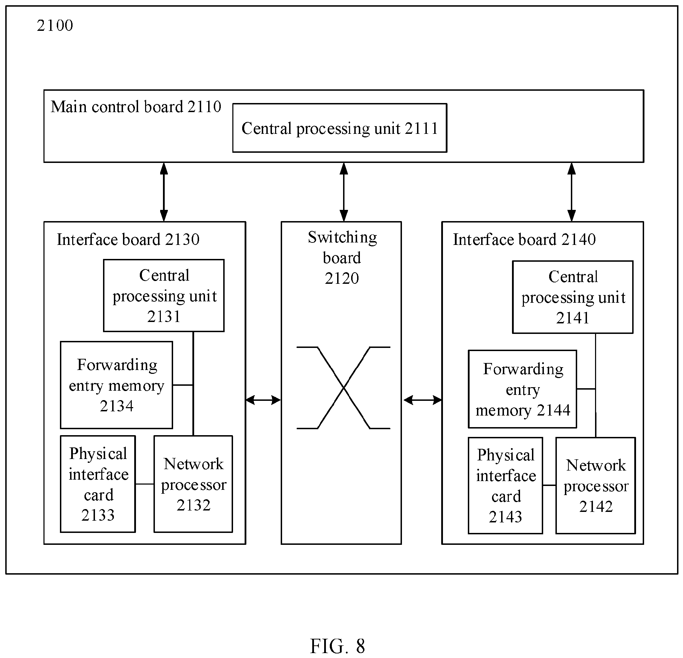

FIG. 8 is a schematic diagram of a hardware structure of another first network device 2100 according to an embodiment of this application. The first network device 2100 shown in FIG. 8 may perform the corresponding steps performed by the first network device in the methods in the foregoing embodiments.

As shown in FIG. 8, the first network device 2100 includes a main control board 2110, an interface board 2130, a switching board 2120, and an interface board 2140. The main control board 2110, the interface boards 2130 and 2140, and the switching board 2120 are connected to a system backboard through a system bus for interworking. The main control board 2110 is configured to complete functions such as system management, device maintenance, and protocol processing. The switching board 2120 is configured to exchange data between interface boards (the interface board is also referred to as a line card or a service board). The interface boards 2130 and 2140 are configured to provide various service interfaces (for example, a POS interface, a GE interface, and an ATM interface), and forward a data packet.

The interface board 2130 may include a central processing unit 2131, a forwarding entry memory 2134, a physical interface card 2133, and a network processor 2132. The central processing unit 2131 is configured to control and manage the interface board, and communicate with a central processing unit on the main control board. The forwarding entry memory 2134 is configured to store entries, for example, Table 1 to Table 4 described above. The physical interface card 2133 is configured to receive and send traffic. The network memory 2132 is configured to control, based on the entries, the physical interface card 2133 to receive and send traffic.

Specifically, the physical interface card 2133 is configured to receive a first multicast packet. After receiving the first multicast packet, the physical interface card 2133 sends the first multicast packet to the central processing unit 2111 through the central processing unit 2131, and the central processing unit 2111 processes the first multicast packet.

The central processing unit 2111 is further configured to determine the first information based on the first multicast packet. The central processing unit 2111 is further configured to: determine that a state of the first link interface is unavailable, and perform a modulo operation on the first information based on a second parameter, to obtain second indication information; determine that the first link interface is a link interface of the first network device based on a value of a bit corresponding to the first link interface in a bit string of a first entry; determine, based on the first entry, that the first link interface is a link interface of the first network device; determine, based on a value of a bit corresponding to the first link interface in a bit string, that the state of the first link interface is unavailable; perform a modulo operation on the first information based on a first parameter, to obtain first indication information, where the first indication information indicates the first link interface through which the first network device forwards the first multicast packet; and/or another processes in the technology described herein.

It should be understood that an operation on the interface board 2140 is consistent with an operation on the interface board 2130 in this embodiment of this application. For brevity, details are not described. It should be understood that the first network device 2100 in this embodiment may correspond to the functions and/or the various implemented steps in the method embodiments. Details are not described herein again.

In addition, it should be noted that there may be one or more main control boards, and when there are a plurality of main control boards, the main control boards may include an active main control board and a standby main control board. There may be one or more interface boards. The first network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the first network device may not need the switching board, and the interface board provides a function of processing service data of an entire system. In a distributed forwarding architecture, the first network device may have at least one switching board, and data exchange between a plurality of interface boards is implemented through the switching board, to provide a large-capacity data exchange and processing capability. Therefore, a data access and processing capability of the first network device in the distributed architecture is better than a data access and processing capability of the device in the centralized architecture. A specific architecture that is to be used depends on a specific networking deployment scenario. This is not limited herein.

An embodiment of this application further provides a computer-readable medium, configured to store a computer program. The computer program includes instructions used to perform the method in any possible implementation of any one of the foregoing aspects. The readable medium may be a read-only memory (read-only memory, ROM) or a random access memory (random access memory, RAM). This is not limited in this embodiment of this application.

An embodiment of this application further provides a computer program product, applied to a first network device or a second network device. The computer program product includes computer program code. When the computer program code is executed by a computer, the computer is enabled to perform the method in any possible implementation of any one of the foregoing aspects.

An embodiment of this application further provides a chip system, used in a first network device or a second network device. The chip system includes at least one processor, at least one memory, and an interface circuit. The interface circuit is responsible for information exchange between the chip system and the outside. The at least one memory, the interface circuit, and the at least one processor are interconnected through a line. The at least one memory stores instructions, and the instructions are executed by the at least one processor, to perform operations of the first network device or the second network device in the methods in the foregoing aspects.

An embodiment of this application further provides a computer program product, used in a first network device or a second network device. The computer program product includes a series of instructions. When the instructions are run, operations of the first network device or the second network device in the methods in the foregoing aspects are performed.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, the apparatus, and the method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, they may be located in one position, or may be distributed on a plurality of network units. Some or all of the units may be selected depending on actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The storage medium includes any medium that can store program code such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A packet sending method, wherein the method comprises:
receiving, by a first network device, a first multicast packet;
determining, by the first network device, first information based on the first multicast packet, wherein the first information indicates an attribute of the first multicast packet;
determining, by the first network device, that a state of a first link interface is unavailable, wherein the first link interface is for forwarding the first multicast packet in a load balancing manner;
performing, by the first network device, a modulo operation on the first information based on a second parameter, to obtain second indication information, wherein the second indication information indicates a second link interface through which the first network device forwards the first multicast packet, the second parameter is a quantity of link interfaces whose states are available in the first load balancing group, the first load balancing group comprises the first link interface and the second link interface, and a state of the second link interface is available; and
forwarding, by the first network device, the first multicast packet through the second link interface.

2. The method according to claim 1, wherein the first information comprises one or more of the following:
information about a source address of the first multicast packet, information about a destination address of the first multicast packet, information about the source address and the destination address of the first multicast packet, hash result information corresponding to the source address of the first multicast packet, hash result information corresponding to the information about the destination address of the first multicast packet, and hash result information corresponding to the information about the source address and the destination address of the first multicast packet.

3. The method according to claim 1 or 2, wherein before the determining, by the first network device, that a state of a first link interface is unavailable, the method further comprises:
performing, by the first network device, a modulo operation on the first information based on a first parameter, to obtain first indication information, wherein the first indication information indicates the first link interface through which the first network device forwards the first multicast packet, and the first parameter is related to a quantity of link interfaces in the first load balancing group.

4. The method according to claim 3, wherein the first parameter is greater than or equal to the quantity of link interfaces configured in the first load balancing group.

5. The method according to claim 3 or 4, wherein the method further comprises:
if the first network device determines that the state of the first link interface is available, forwarding, by the first network device, the first multicast packet through the first link interface.

6. The method according to any one of claims 1 to 5, wherein the determining, by the first network device, that a state of the first link interface is unavailable comprises:
determining, by the first network device based on states of the link interfaces in the first load balancing group, that the state of the first link interface is unavailable.

7. The method according to claim 6, wherein the states of the link interfaces in the first load balancing group are a bit string with K bits, K is a positive integer greater than 1, a location of each bit in the bit string indicates one link interface in the first load balancing group, and a value of the bit indicates state information of the link interface; and
the determining, by the first network device based on states of the link interfaces in the first load balancing group, that the state of the first link interface is unavailable comprises:
determining, by the first network device based on a value of a bit corresponding to the first link interface in the bit string, that the state of the first link interface is unavailable.

8. The method according to any one of claims 1 to 7, wherein the method further comprises:
determining, by the first network device based on a first entry, that the first link interface is a link interface of the first network device, wherein the first entry indicates whether each link interface in the first load balancing group is a local interface.

9. The method according to claim 8, wherein the first entry is a bit string with L bits or L lists, L is a positive integer greater than 1, a location of each bit in the bit string indicates one link interface in the first load balancing group, and a value of the bit indicates whether the link interface is a local interface; and
the determining, by the first network device based on a first entry, that the first link interface is a link interface of the first network device, comprises:
determining, by the first network device based on a value of a bit corresponding to the first link interface in the bit string of the first entry, that the first link interface is a link interface of the first network device.

10. The method according to claim 8 or 9, wherein the method further comprises:
receiving, by the first network device, configuration information, wherein the configuration information comprises identities IDs of the link interfaces in the first load balancing group, and the IDs correspond to the bit string of the states of the link interfaces in the first load balancing group.

11. The method according to any one of claims 1 to 10, wherein the method further comprises:
receiving, by the first network device, a message sent by each member in the first load balancing group, wherein the message comprises one or more of the following: an ID of the first load balancing group, a state of a link interface of each member in the first load balancing group, and an ID of a link interface that is of each member in the first load balancing group and that is in the first load balancing group.

12. A first network device, comprising:
a receiving module, configured to receive a first multicast packet;
a determining module, configured to determine first information based on the first multicast packet, wherein the first information indicates an attribute of the first multicast packet, and
the determining module is further configured to determine that a state of a first link interface is unavailable, wherein the first link interface is for forwarding the first multicast packet in a load balancing manner;
a calculation module, configured to perform a modulo operation on the first information based on a second parameter, to obtain second indication information, wherein the second indication information indicates a second link interface through which the first network device forwards the first multicast packet, the second parameter is a quantity of link interfaces whose states are available in the first load balancing group, the first load balancing group comprises the first link interface and the second link interface, and a state of the second link interface is available; and
a sending module, configured to forward the first multicast packet through the second link interface.

13. The first network device according to claim 12, wherein the first information comprises one or any more of the following: information about a source address of the first multicast packet, information about a destination address of the first multicast packet, information about the source address and the destination address of the first multicast packet, hash result information corresponding to the source address of the first multicast packet, hash result information corresponding to the information about the destination address of the first multicast packet, and hash result information corresponding to the information about the source address and the destination address of the first multicast packet.

14. The first network device according to claim 12 or 13, wherein the calculation module is further configured to:
perform a modulo operation on the first information based on a first parameter, to obtain first indication information, wherein the first indication information indicates the first link interface through which the first network device forwards the first multicast packet, and the first parameter is related to a quantity of link interfaces in the first load balancing group.

15. The first network device according to claim 14, wherein the first parameter is greater than or equal to the quantity of link interfaces configured in the first load balancing group.

16. The first network device according to claim 14 or 15, wherein the determining module is further configured to:
determine that the state of the first link interface is available, and forward the first multicast packet through the first link interface.

17. The first network device according to any one of claims 12 to 16, wherein the determining module is specifically configured to:
determine, based on states of the link interfaces in the first load balancing group, that the state of the first link interface is unavailable.

18. The first network device according to claim 17, wherein the states of the link interfaces in the first load balancing group are a bit string with K bits, K is a positive integer greater than 1, a location of each bit in the bit string indicates one link interface in the first load balancing group, and a value of the bit indicates state information of the link interface; and
the determining module is specifically configured to:
determine, based on a value of a bit corresponding to the first link interface in the bit string, that the state of the first link interface is unavailable.

19. The first network device according to any one of claims 12 to 18, wherein the determining module is further configured to:
determine, based on a first entry, that the first link interface is a link interface of the first network device, wherein the first entry indicates whether each link interface in the first load balancing group is a local interface.

20. The first network device according to claim 19, wherein the first entry is a bit string with L bits or L lists, L is a positive integer greater than 1, a location of each bit in the bit string indicates one link interface in the first load balancing group, and a value of the bit indicates whether the link interface is a local interface; and
the determining module is specifically configured to:
determine, based on a value of a bit corresponding to the first link interface in the bit string of the first entry, that the first link interface is a link interface of the first network device.

21. The first network device according to claim 19 or 20, wherein the receiving module is further configured to:
receive configuration information, wherein the configuration information comprises identities IDs of the link interfaces in the first load balancing group, and the IDs correspond to the bit string of the states of the link interfaces in the first load balancing group.

22. The first network device according to any one of claims 12 to 21, wherein the receiving module is further configured to:
receive a message sent by each member in the first load balancing group, wherein the message comprises one or more of the following: an ID of the first load balancing group, a state of a link interface of each member in the first load balancing group, and an ID of a link interface that is of each member in the first load balancing group and that is in the first load balancing group.

23. A first network device, comprising a processor and a memory, wherein the memory is configured to store a program, and the processor is configured to invoke the program from the memory and run the program to perform the method according to any one of claims 1 to 11.

24. A computer-readable storage medium, comprising a computer program, wherein when the computer program is run on a computer, the computer is enabled to perform the method according to any one of claims 1 to 11.
